(19) Europäisches Patentamt / European Patent Office / Office européen des brevets

(11) EP 1 914 260 B1

(12) **EUROPÄISCHE PATENTSCHRIFT**

(45) Veröffentlichungstag und Bekanntmachung des Hinweises auf die Patenterteilung:
**12.02.2014 Patentblatt 2014/07**

(51) Int Cl.:
***C08G 77/20*** *(2006.01)* ***C08G 77/22*** *(2006.01)*
***C07F 7/18*** *(2006.01)*

(21) Anmeldenummer: **07113260.9**

(22) Anmeldetag: **25.10.2004**

(54) **Silane und Kieselsaeurepolykondensate mit verzweigtkettigen, urethan-, saeureamid- und/oder carbonsaeureestergruppenhaltigen Resten**

Silanes and Silicic Acid Polycondensates with Branched Chain Radicals Containing Urethane, Acid Amide and/or Carboxylic Acid Ester Groups

Silanes et polycondensés d'acide silicique ayant des groupes à chaîne ramifiée contenant des restes uréthane, amide d'acide et/ou ester d'acide carboxylique

(84) Benannte Vertragsstaaten:
**AT BE BG CH CY CZ DE DK EE ES FI FR GB GR HU IE IT LI LU MC NL PL PT RO SE SI SK TR**

(30) Priorität: **24.10.2003 DE 10349766**

(43) Veröffentlichungstag der Anmeldung:
**23.04.2008 Patentblatt 2008/17**

(62) Dokumentnummer(n) der früheren Anmeldung(en) nach Art. 76 EPÜ:
**04790821.5 / 1 685 182**

(73) Patentinhaber: **Fraunhofer-Gesellschaft zur Förderung der angewandten Forschung e.V.**
**80686 München (DE)**

(72) Erfinder: **Wolter, Herbert**
**97941, Tauberbischofsheim (DE)**

(74) Vertreter: **Olgemöller, Luitgard Maria et al**
**Patentanwältin**
**Lindenstraße 12a**
**81545 München (DE)**

(56) Entgegenhaltungen:
**EP-A- 0 682 033**
**EP-A- 1 022 012**
**WO-A1-2005/040249**
**US-B1- 6 222 055**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 914 260 B1

## Beschreibung

Die vorliegende Erfindung betrifft neuartige Silane und daraus gebildete Kieselsäurepolykondensate und -teilkondensate, in denen ein an einem Silicium gebundener, organischer Rest vorhanden ist, der verzweigt ist und and jedem der beiden Zweige mindestens eine eigenständig organisch polymerisierbare Gruppe trägt oder an einem der beiden Zweige eine solche Gruppe, am anderen einen Rest mit einem weiteren Siliciumatom aufweist. Die zweite dieser beiden Gruppen bzw. der siliciumafomhaltige Rest ist über eine Säureamid-, Urethan- oder Carbonsäureestergruppe an den genannten organischen Rest gebunden. Die Erfindung umfasst weiterhin verschiedene Verfahren zur Herstellung dieser Kondensate sowie damit hergestellte Polymerisate und Komposite.

Kieselsäureheteropolykondensate, erhältlich durch Hydrolyse und Kondensation von Silanen mit hydrolysierbaren Gruppen, sind seit langem bekannt (siehe z.B. DE PS 27 58 414). Solche Kondensate können zu vielerlei Produkten verarbeitet werden, beispielsweise zu Überzügen, Beschichtungen, Membranen oder Bulkmaterialien. Die zugrundeliegenden Silane können auch Doppelbindungen oder andere organisch reaktive Gruppen aufweisen, durch die sie in ein organisches Netzwerk einpolymerisiert werden können (siehe z.B. DE 40 11 044 C2 und DE 44 05 261 A1). Eine ganz spezifische Gruppe solcher Materialien lässt sich aus Kieselsäurepolykondensaten erhalten, die einen am Silicium gebundenen Rest aufweisen, der neben mindestens einer organisch reaktiven Gruppe zusätzlich eine freie Hydroxy- oder Carbonsäuregruppe enthält. Solche Kieselsäurepolykondensate sind in der DE 44 16 857 C1 beschrieben. Sie sind, allein oder in Mischungen oder zusammen mit anderen hydrolysierbaren, kondensierbaren oder polymerisierbaren Komponenten, für die Herstellung von kratzfesten Beschichtungen, Füll, Klebe- oder Dichtungsmassen, Formkörpern oder Einbettmaterialien geeignet. Die Gruppe der in der DE 44 16 857 C1 beschriebenen Verbindungen zeichnet sich ferner dadurch aus, dass der Abstand zwischen Silicium und reaktiver bzw. reaktiven Doppelbindung(en) beliebig einstellbar ist, weshalb die physikalischen Eigenschaften der damit erhaltenen Kondensate bzw. Polymerisate in weiten Bereichen einstellbar sind.

Die Carbonsäuregruppe der carbonsauremodifizierten Silane der DIE 44 16 857 C1 sind Ladungsträger und ermöglichen damit beispielsweise die Herstellung von Dispersionen bzw. Emulsionen oder von Elektrotauchlackierungen. Außerdem können diese Gruppen mit geeigneten Metallverbindungen des Titans,

Zirkons, Zinns und anderen komplexiert werden oder, im Falle von freien Hydroxygruppen, selbst als Komplexierungsmittel fungieren, was sich positiv auf die Röntgenopazität, die Kontakttoxizität und die Steigerung des Brechungsindex auswirken kann. Die Kombination von Carboxylgruppen mit polymerisierbaren C=C-Doppelbindungen in Verbindung mit dem anorganischen Silanteil stellt eine ideale Verbindung zum Einsatz als Polyalkensäuren in Ionomerzementen dar. Allerdings werden in manchen Fällen Systeme mit einer geringeren Matrixhydrophilie als derjenigen der Kondensate benötigt, die man aus den Verbindungen der DE 44 16 857 C1 erhält. Denn mit Systemen mit einer niedrigeren Matrixhydrophilie würde sich deren Wasseraufnahme in Gegenwart von Feuchtigkeit verringern, ihre Naßfestigkeit steigern und die Viskosität der Harze senken lassen. Darüber hinaus kann ein noch höheres organisches Vernetzungspotential und damit eine generelle Steigerung der Festigkeit wünschenswert sein.

Aufgabe der vorliegenden Erfindung ist es, solche Systeme sowie die dafür benötigen Silane bereitzustellen, und zwar über den Einbau einer spezifischen Gruppierung in diese, die im übrigen eine große Variabilität der übrigen Strukturelemente und damit der Eigenschaften der erzeugbaren Harze und Polymerisate ermöglicht.

Gelöst wird diese Aufgabe durch die Bereitstellung von Silanen der Formel (Ia)

$$\{B\text{-}R^1\text{-}R\text{-}\}_a(R')_bSi(X)_{4\text{-}a\text{-}b} \qquad \text{(Ia)}$$

|
Z'
|
B',

die frei sind von freien Hydroxy- und Carboxylgruppen, sowie von Kieselsäurepolykondensaten oder -teilkondensaten, enthaltend das folgende Strukturelement (Ib):

$$\{B\text{-}R^1\text{-}R\text{-}\}_a(R')_bSi(OR^3)_{4\text{-}a\text{-}b} \qquad \text{(Ib)}$$

|
Z'
|
B',

worin die Reste und Indices die folgende Bedeutung haben:

R ist eine offenkettige und/oder cyclische Alkylen-, Arylen- oder Alkylenarylengruppe mit jeweils 1 bis 10 Kohlenstoffatomen, die in manchen Fällen durch eine oder mehrere Sauerstoff- oder Schwefelatome oder Carboxyl- oder Aminogruppen unterbrochen sein oder solche Atome/Gruppen an ihrem dem Siliciumatom abgewandten Ende tragen kann.

$R^1$ ist eine offenkettige und/oder cyclische Alkylen-, Arylen- oder Alkylenarylengruppe mit jeweils 1 bis 10 Kohlenstoffatomen, die in manchen Fällen durch eine oder mehrere Sauerstoff- oder.Schwefelatome oder Carboxyl- oder Aminogruppen unterbrochen sein oder solche Atome/Gruppen an einem ihrer Enden tragen kann und die, wie aus den Formeln (la) und (Ib) ersichtlich, die Gruppe Z' als Substituenten trägt.

Die an ein Siliciumatom gebundenen Reste $R^3$ können gleich oder verschieden sein. Zumindest ein Teil davon muss die Bedeutung einer Bindung zu einem anderen Siliciumatom, ggf. stattdessen teilweise auch zu einem anderen Metallatom, das sich in Kieselsäureheteropolykondensate einbauen lässt, besitzen. In vielen Fällen werden nicht alle Reste $R^3$ diese Bedeutung haben, dann wird ein Teil davon statt dessen ein Wasserstoffatom sein, das Siliciumatom also eine oder mehrere Hydroxygruppen tragen. Für den Fall, dass 4-a-b 3 ist, können durchschnittlich in etwa 30 bis 70 %, also bis zu etwa zwei der drei Gruppen $OR^3$ Hydroxy sein. Wenn 4-a-b 2 ist, kann die Anzahl der nicht vernetzten Gruppen $OR^3$ durchschnittlich bis zu etwa 50% betragen. Bei 50% ist durchschnittlich eine der beiden Gruppen mit einem weiteren Silicium- oder Metallatom vernetzt. In manchen der vorgenannten Fälle kann ein Teil der Gruppen $R^3$ statt Wasserstoff auch eine Alkylgruppe mit 1 bis 10, vorzugsweise 1 bis 4, Kohlenstoffatomen darstellen. Über den Anteil der Reste, die Bindungen zu weiteren Si-Atomen oder anderen Metallatomen darstellen, definiert sich der Kondensationsgrad des (Teil-)Kondensates zumindest soweit, wie es sich über die obige Formel (Ib) darstellen lässt.

R' ist eine offenkettige und/oder cyclische Alkyl-, Alkenyl-, Aryl-, Alkylaryl- oder Arylalkylgruppe mit vorzugsweise 1 bis 10 Kohlenstoffatomen; diesbezüglich sei auch auf die weiteren Erläuterungen zur Funktion dieser Gruppe verwiesen, die sich bei der Definition der unten beschriebenen Formel (II) finden.

B hat die Bedeutung einer geradkettigen oder verzweigten organischen Gruppe mit mindestens einer C=C-Doppelbindurig und mindestens 2, vorzugsweise bis zu 50 Kohlenstoffatomen haben, B' bedeutet $-R^2{}_aSiX_{4-a}$ oder $-R^2{}_aR'_bSiX_{4-a-b}$, worin $R^2$ eine Alkylengruppe mit 1 bis 10 Kohlenstoffatorrien und X wie nachstehend definiert ist. Die Reste B tragen beliebige organisch polyrherisierbare Gruppen. Die mindestens eine C=C-Doppelbindung in B bzw. B' kann beispielsweise Bestandteil einer Vinyl-, Allyl-, Norbomen-, Acryl- und/oder Methacrylgruppe sein. In einer bevorzugten Ausgestaltung trägt der Rest B ein Michaelsystem, besonders bevorzugt eine Acrylat- oder Methacrylatgruppe. In einer weiteren bevorzugten Ausgestaltung trägt der Rest B zwei oder sogar drei Michaelsysteme, z.B. Acrylat- oder Methacrylatgruppen. Besonders zu nennen sind Reste B, die als Strukturelemente $C_2$-$C_4$-Alkandiole, die Trimethylolpropan-gruppe, die Pentaerythritgruppe oder die Glycerolstruktur enthalten. B kann Acrylsäureestergruppen und oder Methacrylsäureester-gruppen des Trimethylolpropan, der Glycerins, des Pentaerythrits, der $C_2$-$C_4$-Alkandiole, der Polyethylenglycole, der Polypropylenglycole oder des gegebenenfalls substituierten und/oder alkoxylierten Bisphenol A sein oder diese Ester umfassen. Ebenfalls bevorzugt ist es, dass B nur eine (Meth)acrylatgruppe enthält, die über eine Esterbindung des Carboxylrestes an das übrige Molekül gebunden ist. B kann ein durchgehendes Kohlenstoffskelett aufweisen, die Kohlenstoffkette(n) (Haupt- und/oder Seitenkette(n) können aber auch durch Heteroatome bzw. Gruppen wie O, S, SO, NH NHCO, PR, POR, CONHCO, COO, NHCOO oder dergleichen unterbrochen sein. Das Kohlenstoffskelett von B kann ausschließlich aliphatisch sein, und zwar mit offenen und/oder geschlossenen Strukturen, B kann aber auch einen oder mehrere aromatische(n) oder kondensierte Systeme oder Triazingruppen oder dgl. aufweisen, z.B. Bisphenol-A-Strukturen oder dergleichen. Ferner können die Gruppen oder Strukturen beliebig substituiert sein, z.B., mit Säure-, Säureamid-, Ester- oder Aminogruppen.

In einer spezifischen Ansführungsform handelt es sich bei B' um eine Dialkoxysilylalkylengruppe mit 1 bis 4 Kohlenstoffen in den Alkyl- und Alkoxygruppen und 1 bis 8 Kohlenstoffen in der Alkylengruppe.

X ist eine Gruppe, die unter Ausbildung von Si-O-Si-Brücken eine hydrolytische Kondensationsreaktion eingehen kann. Gruppen X werden als anorganische Netzwerkbildner bezeichnet, da sich bei der hydrolytischen Kondensationsreaktion ein Kieselsäurepolykondensat-Netzwerk ausbilden kann. Dem Fachmann ist dementsprechend bekannt, welche Bedeutung X annehmen kann. Vorzugsweise ist X eine $C_1$-$C_{10}$-Alkoxygruppe, stärker bevorzugt eine $C_1$-$C_4$-Alkoxygruppe und ganz besonders bevorzugt Methoxy oder Ethoxy. X kann aber auch je nach Bedarf ein Halogenid wie Cl, Wasserstoff, Hydroxy, Acyloxy mit vorzugsweise 2 bis 5 Kohlenstoffatomen, Alkylcarbonyl mit vorzugsweise 2 bis 6 Kohlenstoffatomen, oder Alkoxycarbonyl mit vorzugsweise 2 bis 6 Kohlenstoffatomen sein. In manchen Fällen kann X auch NR" mit R" gleich Wasserstoff, Alkyl mit vorzugsweise 1-4 Kohlenstoffatomen oder Aryl mit vorzugsweise 6-12 Kohlenstoffatomen bedeuten. Z' hat die Bedeutung -NH-C(O)O-, -NH-C(O)- oder -CO(O)-, wobei die beiden erstgenannte Reste über die NH-Gruppe am Rest B' gebunden sind, während die Carboxylatgruppe in beide Richtungen weisen kann.

a bedeutet 1 oder 2, vorzugsweise 1, und b kann 0 oder 1 sein.

$R^2$ ist vorzugweise ein Rest mit 1 bis 4 Kohlenstoffatomen und besonders bevorzugt Propylen, und $R^3$ ist vorzugsweise ein Rest mit 1 bis 4 Kohlenstoffatomen und besonders bevorzugt Methyl oder Ethyl, oder eine Bindung

zu einem weiteren Si-Atom.

Unter den Ausdrücken "(Meth-)Acrylat", "(Meth-)Acrylsäurerest" und dergleichen soll zu verstehen sein, dass wahlweise ein Methacrylat oder ein Acrylat bzw. wahlweise ein Methacrylsäurerest oder ein Acrylsäurerest vorhanden ist, oder dgl..

In einer spezifischen Ausgestaltung der Silane gemäß Formel (Ia) enthält B eine, zwei oder drei weitere Gruppen

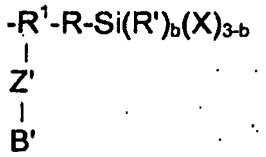

In dieser Ausgestaltung liegen an einem Rest B zwei oder mehrere Silanreste gebunden vor. Die hydrolytische Kondensation solcher Silane führt ebenfalls zu Kieselsäurepoly(teil)kondensateri der Formel (Ib), die die obigen Strukturelemente enthalten.

Erfindungsgemäß werden damit Silane und davon abgeleitete Kieselsäurepoly(teil)kondensate bereitgestellt, die unter Verwendung von Strukturelementen aufgebaut sind, welche einen teilweise oder vollständig hydrolysierbaren/hydrolysierten und/oder kondensierbarerilkondensierten Silanrest, mindestens eine Urethan-, Säureamid- oder Carbonsäureestergruppe und entweder mindestens zwei verzweigt angeordnete, C=C-Doppelbindungen enthaltende, organisch polymerisierbare Reste, von denen einer über die genannte Urethan-, Säureamid- oder Carbonsäureestergruppe an das Siliciumatom gebunden ist, oder einen solchen organisch polymerisierbaren Rest und einen über die genannte Urethan-, Säureamid- oder Carbonsäureestergruppe an diesen organischen Rest gebundenen weiteren, ein Siliciumatom enthaltenden Rest aufweisen. Alle drei Molekülteile können entsprechend JTB (ISC) 1992, S.61-72 und Polymer + Materials Research Symposium 1993, Bayreuth, S.14-17, zu Eigenschaftsmodifikationen genutzt werden. Dabei ermöglicht die über die Urethan-, Säureamid- bzw. Carbonsäureestergruppe eingeführte zusätzliche polymerisierbare Gruppe eine zusätzliche Vernetzungsmöglichkeit über die organischen Reste, verglichen mit den Kieselsäurepolykondensaten der DE 44 16 857 C1, wodurch sich festere Polymere erhalten lassen, während die hierüber eingeführte Gruppe mit einem weiteren Siliciumatom eine Verdichtung des Si-O-Si-Netzes im Kondensat möglich macht.

Wie weiter unten ausführlich erläutert, kann man die erfindungsgemäßen Silane und davon abgeleiteten Kieselsäurepoly(teil)kondensate ausgehend von Silanen erhalten, die einen Rest B sowie eine an einem Linker zwischen diesem Rest B und dem Siliciumatom gebundene Hydröxy- oder Carboxylgruppe aufweisen. Sie sind in der DE 44 16 857 C1 beschrieben. Vergleicht man die Systeme, die man durch direkte Kondensation solcher Silane erhält, mit denjenigen der vorliegenden Erfindung, ist festzustellen, dass die Matrixhydrophilie der erfindungsgemäßen Systeme gegenüber denen der Systeme gemäß DE 44 16 857 C1 herabgesetzt ist, da keine freien OH- oder Carbonsäuregruppen vorhanden sind, so dass man nassfestere, weniger viskose Harze mit einer geringeren Empfindlichkeit gegenüber Feuchtigkeit erhalten kann. Auf der anderen Seite läßt sich über die Variabilität der Reste B, B', R, $R^1$ und R' eine hohe Variabilität erzielen, die zu besonderen und neuen Eigenschaftskombinationen führt. Ein weiterer Vorteil der vorliegenden Erfindung liegt darin, dass man monomerfreie Kondensate und daraus (durch Polymerisation der organisch polymerisierbaren Gruppen) organische Polymere mit guten mechanischen Eigenschaften und geringer Schrumpfung bei Viskositätseigenschaften erhalten kann, die gute Verarbeitungsmöglichkeiten bieten. Solche Polymere werden nachstehend als Polymerisate bezeichnet, wenn sie füllmittelfrei sind, und als Komposite, wenn sie Füllstoffe enthalten.

Bevorzugt sind erfindungsgemäß Silane der Formel (Ia) und Kieselsäurepolykondensate mit dem genannten Strukturelement (Ib), worin B die Bedeutung B"-Z- besitzt und Z eine -O-C(O)-, -S-C(O) oder -NH-C(O)-Gruppe ist, wenn Z' -NH-CO- ist, und Z -O-$R^4$, -S-$R^4$, -NH-$R^4$, -C(O)O-$R^4$, -O-, -S-, -NH- oder -C(O)O- ist, wenn Z' -NH-C(O)O- ist. $R^4$ kann dabei die Bedeutung Alkylen, Arylen oder Alkylarylen mit vorzugsweise 1 bis 10 (für ringfreie Gruppen) bzw. 6 bis 14 (für ringhaltige Gruppen) Kohlenstoffatomen haben. B" ist dabei wie B eine geradkettige oder verzweigte organische Gruppe mit mindestens einer C=C-Doppelbindung und 2 bis vorzugsweise 50 Kohlenstoffatomen. B" besitzt bevorzugt die auch für B als bevorzugt genannten Bedeutungen.

Die Kieselsäurepoly(teil)kondensate mit dem Strukturelement der Formel (Ib) können gegebenenfalls auch aus einem Gemisch von verschiedenen Silanen der Formel (Ia) abgeleitet sein, in denen die Reste B und/oder B' unterschiedliche Bedeutungen besitzen. In diesen Kondensaten besitzen dann die Reste B und/oder B' keine einheitliche Bedeutung. Da andererseits B in diesen Kondensaten einerseits die Bedeutung haben kann, wie sie für B' definiert ist, andererseits aber auch eine davon verschiedene, umfaßt die Formel (Ib) Kieselsäurepoly(teil)kondensate, in denen alle Reste B und B' dieselbe Bedeutung haben, Kieselsäurepoly(teil)kondensate, in denen B und B' eine unterschiedliche Bedeutung haben, aber alle Reste B und alle Reste B' jeweils denselben Rest darstellen, und Kieselsäurepoly(teil) kondensate, in denen die Reste B' eine von B verschiedene Bedeutung besitzen und die Reste B und/oder die Reste B' jeweils Mischungen von unterschiedlichen Resten sind. Alternativ oder zusätzlich können diese Kondensate Fremdmetallatome enthalten, die sich in solche Systeme einkondensieren lassen, beispielsweise Bor, Aluminium, Germanium, Zinn, Titan oder Zirkon. Die Metalle, die hierfür geeignet sind, sind dem Fachmann bekannt. Bei fremdmetallhaltigen Kieselsäurepoly(teil)kondensaten handelt es sich dann um Heterokieselsäurepoly(teil)kondensate.

Es ist darauf hinzuweisen, dass die Bestandteile B, B' und Z' in den erfindungsgemäßen Kieselsäure(teil) kondensaten mit dem Strukturelement (Ib) nicht notwendigerweise im stöchiometrischen Verhältnis zueinander vorhanden sein müssen, wie es sich aus dem Strukturelement selbst ergibt. Wie man auch nachstehend aus der Beschreibung und den Beispielen ersehen kann, kann zum Beispiel der Rest B' unterstöchiometrisch vorhanden sein. In diesen Fällen enthält das Poly(teil)kondensat noch freie (oder durch Umesterung anderweitig "verkappte" oder "geschützte") Hydroxy- oder Carboxylgruppen, was, wie oben beschrieben, das Viskositätsverhalten der Harze beeinflusst.

Über die organisch polymerisierbaren Anteile der Reste B sind die erfindungsgemäßen Kieselsäurepolykondensate organisch vernetzbar. Dabei wird wegen des Vorhandenseins von mindestens zwei organisch vernetzbaren Gruppen pro Silanmolekül ein System erhalten, dessen organischer Anteil zu einer besonders hohen mechanischen Festigkeit sowie einem verbesserten Schrumpfverhalten mit einer verringerten Schrumpfung führt.

Da B' $-R^2{}_aSiX_{4-a}$ oder $R^2{}_aR'_bSiX_{4-a-b}$ ist, kann das erfindungsgemäße Siliciumpolykondensat in dieser Ausgestaltung wegen des Vorhandenseins eines weiteren Siliciumatoms ein besonders dichtes Si-O-Si-Netzwerk ausbilden.

Erhältlich sind die erfindungsgemäßen Verbindungen und (Teil-)Kondensate beispielsweise ausgehend von Verbindungen der Formel II

$$\{B-\underset{\displaystyle Y}{\underset{|}{R^1}}-R-\}_a(R')_bSiX_{4-a-b} \qquad (II)$$

worin B, $R^1$, R, R', X a und b die für die Formeln (Ia) und (Ib) angegebenen Bedeutungen besitzen und Y OH oder COOH ist. Die am Siliciumatom befindlichen Substituenten oder Reste R' und X können beliebig ausgewählt werden. In der Literatur über die anorganisch-organischen, Siliciumatome, enthaltenden Materialien, z.B. diejenigen, die unter der Bezeichnung "ORMOCERE"® im Handel sind, ist viel über die jeweiligen Eigenschaften geschrieben worden, die die jeweiligen Silanreste dem Kondensat oder organisch polymerisierten Netzwerk verleihen, so daß hier keine detaillierten Erläuterungen nötig sind. Mit X werden hydrolysierbare Reste bezeichnet. Mit diesen Gruppen, die auch als anorganische Netzwerkbildner bezeichnet werden, werden im Zusammenspiel mit ggf. vorhandenen organischen Netzwerkbildnem, hier also insbesondere den organisch polymerisierbaren Gruppen der Reste B und ggf. B', physikalische Eigenschaften des sich bildenden Netzwerks eingestellt wie Härte bzw. Flexibilität oder der thermische Ausdehnungskoeffizient. Die in der Regel nicht organisch polymerisierbaren Gruppen R' werden als Netzwerkwandler bezeichnet; mit ihrer Wahl lassen sich ebenfalls eine Reihe von Eigenschaften beeinflussen. Dem Fachmann ist dementsprechend bekannt, welche Bedeutung X annehmen kann. Vorzugsweise ist X eine $C_1$-$C_{10}$-Alkoxygruppe, stärker bevorzugt eine $C_1$-$C_4$-Alkoxygruppe und ganz besonders bevorzugt Methoxy oder Ethoxy. X kann aber auch je nach Bedarf ein Halogenid wie Cl, Wasserstoff, Hydroxy, Acyloxy mit vorzugsweise 2 bis 5 Kohlenstoffatomen, Alkylcarbonyl mit vorzugsweise 2 bis 6 Kohlenstoffatomen, Alkoxycarbonyl mit vorzugsweise 2 bis 6 Kohlenstoffatomen, ggf. auch NR" mit R" gleich Wasserstoff, Alkyl mit vorzugsweise 1-4 Kohlenstoffatomen oder Aryl mit vorzugsweise 6-12 Kohlenstoffatomen, oder eine andere geeignete Abgangsgruppe sein.

Verbindungen der Formel (II) sind bekannt. So lassen sich beispielsweise gemäß der DE 44 16 857 C1 Verbindungen der Formel (II) herstellen, in denen B die Bedeutung B"-Z- besitzt, wobei auch B" die Bedeutung einer geradkettigen oder verzweigten organischen Gruppe mit mindestens einer C=C-Doppelbindung und 2 bis vorzugsweise 50 Kohlenstoffatomen mit den für B beschriebenen bevorzugten Ausgestaltungen besitzt und Z eine -O-C(O)-, -S-C(O) oder -NH-C(O)-Gruppe ist, und zwar durch Additionsreaktionen cyclischer Carbonsäureanhydrid-Silane beliebiger Ringgröße mit Verbindungen B"(AH), worin AH eine Hydroxy-, eine Mercapto- oder eine Aminogruppe ist, wobei man Produkte erhält, in denen Y -COOH bedeutet. Setzt man statt dessen Epoxid-Silane mit Verbindungen B"(AH) um, in denen AH eine Hydroxy-, eine Mercapto- oder eine Aminogruppe oder ein Carbonsäurerest ist, erhält man Produkte, in denen Y -OH bedeutet und Z -O-R", -S-R", -NH-R", -C(O)O-R", -O-, -S-, -NH- oder -C(O)O- ist. R" besitzt dabei die oben angegebene Bedeutung. Die Umsetzung erfolgt in der Regel katalysatorfrei im Falle der Umsetzung mit Carbonsäureanhydrid-Silanen und meist in Gegenwart eines geeigneten Katalysators, z.B. tertiärer Amine wie Triethylamin oder Phosphine wie Triphenylphosphin, und ggf. bei erhöhten Temperaturen, wenn ein Epoxid-Silan eingesetzt wird.

Bei den voranstehend beschriebenen Umsetzungen zur Herstellung der Verbindungen der Formel (II) können je nach tatsächlich eingesetzten Ausgangsmaterialien Isomere und Umesterungsprodukte dieser Verbindungen entstehen. Dies ist insbesondere dann in erheblichem Maße der Fall, wenn die Reste X Alkoxygruppen, vor allem Methoxy- oder Ethoxygruppen sind. Da in solchen Isomeren und Umesterungsprodukten teilweise die Gruppe Y in die Isomerisierungs-/Umesterungsreaktion involviert ist, ist sie in diesen Produkten teilweise nicht mehr frei. Es hat sich aber herausgestellt, das diese Nebenprodukte genauso gut für die Herstellung der erfindungsgemäßen Kondensate herangezogen werden können, wie die Verbindungen der Formel (II) selbst, wobei eine Trennung der verschiedenen Produkte gar nicht notwendig ist. Es ist statt dessen ausreichend, die für die Herstellung der Verbindungen mit der Formel (II) beschriebenen Ausgangsmaterialien miteinander in der angegebenen Weise umzusetzen und anschließend einer Hydrolyse zu unterwerfen. Überraschenderweise wird dabei die Gruppe Y wieder frei, während die Rückbildung von SiOH-Gruppen unterschiedlich stark ausfällt und im wesentlichen unterdrückt werden kann. Deshalb erhält man in der Regel ein Kondensat mit einem Si-O-Si-Netzwerk.

Die Verbindungen der Formel (II) bzw. ihre Kondensationsprodukte mit wieder freigesetzter Gruppe Y werden bei Bedarf aufgearbeitet (z.B. getrennt, gewaschen, isoliert) und/oder, wenn erforderlich, getrocknet. Insbesondere sollte dabei ggf. darauf geachtet werden, dass keine oder möglichst wenig H-aktive Verunreinigungen im Reaktionsgemisch vorhanden sind, um in der nachstehend beschriebenen Umsetzung Nebenreaktionen mit dem Isocyanat zu vermeiden. Sodann können sie mit einem Isocyanat umgesetzt werden, wobei dann, wenn Y OH bedeutet, ein Produkt entsteht, in welchem Z' eine Urethangruppe -NH-C(O)O- ist, und wenn Y COOH bedeutet, Z' eine Säureamidgruppe -C(O)-NH- ist. Alternativ werden sie mit einer Carbonsäure oder einer aktivierten Carbonylgruppe (z.B. einem Säurechlorid oder -anhydrid) (für Y gleich OH) oder einem Alkohol (für Y gleich COOH) nach gängigen Verfahren, z.B. in Gegenwart von Aktivierungsmitteln wie Dicyclohexylcarbodiimid, umgesetzt, wobei eine Estergruppe -C(O)O- entsteht, die je nach Ausgangssubstanzen in die eine oder in die andere Richtung weisen kann.

Wenn monomere Verbindungen der Formel (II) umgesetzt wurden, wird man in der Regel Silane der Formel (Ia) erhalten. Diese können anschließend einer hydrolytischen Kondensation unterworfen werden, um zu Kondensaten der Formel (Ib) zu gelangen.

Die Herstellung der erfindungsgemäßen Verbindungen kann auf verschiedene Arten erfolgen. Einige Verfahrensvarianten sind nachstehend prinzipiell beschrieben.

Im ersten Schritt der Herstellung wird in einer ersten Ausgestaltung der Erfindung eine Verbindung B''(COOH), worin B'' die obige Bedeutung besitzt, mit einem einen Oxiranring enthaltenden Silan $[CH_2\text{-}CH(O)]\text{-}R\text{-}Si(X)_3$ umgesetzt, in dem R und X die für die Formeln (Ia), (Ib) und (II) angegebenen Bedeutungen besitzen. Vorzugsweise ist X eine Methoxy, Ethoxy-, Propoxy- oder Butoxygruppe. R kann beispielsweise $-CH_2\text{-}O\text{-}(CH_2)_3$ sein. Die Umsetzung erfolgt vorzugsweise in Gegenwart eines Katalysators wie oben erläutert und bei erhöhten Temperaturen. Wie voranstehend beschrieben, entstehen bei dieser Umsetzung je nach Ausgangsmaterial und Reaktionsbedingungen nicht nur Verbindungen der Formel (II), sondern auch oder sogar ausschließlich Kondensationsprodukte, beispielsweise durch Verlust eines Moleküls Alkohol unter Ausbildung von Brückenbindungen zwischen dem Sauerstoffatom der sich bildenden Hydroxygruppe (der Gruppe Y in Formel (II)) und einem Siliciumatom, gemäß dem folgenden Schema, das anhand des Beispiels einer Umsetzung von Methacrylsäure mit 3-Glycidyloxypropyltrimethoxysilan ("Glymo") gezeigt sei:

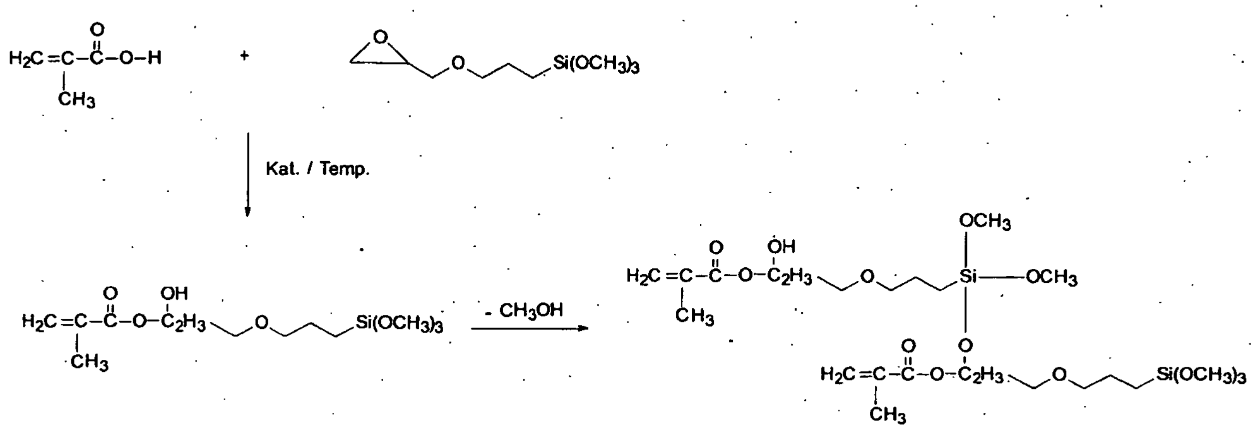


Das Produkt bzw, die Produktmischung kann, sofern die OH-Gruppen nicht vollständig hydrolysiert sind, einer Hydrolyse unterworfen werden, die unter anderem eine Kondensation der Silanreste bewirkt. Überraschenderweise entstehen dabei dann, wenn für X eine Alkoxygruppe gewählt wird, nicht unbedingt nennenswerte Mengen an freien Hydroxygruppen an den Siliciumatomen, während die Hydroxygruppe an der Position Y zurückgebildet wird. Wie bereits voranstehend im allgemeineren erläutert, lässt sich nämlich die Bildung freier Hydroxygruppen am Siliciumatom einstellen und bei Bedarf im wesentlichen unterdrücken. Man kann demzufolge ein Kieselsäurepolykondensat oder -Teilkondensat erhalten, das zu sehr großen, ggf. überwiegenden Teilen oder sogar vollständig das folgende Strukturelement (III)

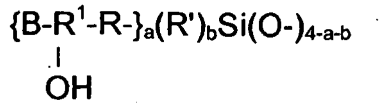

(III)

aufweist, worin die angegebenen Reste und Indices die voranstehend erläuterte Bedeutung besitzen.

Die vorstehend beschriebene Hydrolyse wird jedoch häufig nicht notwendig sein. Denn die Silylierung der Hydroxygruppe kann diese ggf. "schützen". Wenn im Reaktionsgemisch teils freie, teils geschützte OH-Gruppen vorliegen, lässt sich daraus leicht ein Kondensat der Formel (Ib) erzeugen, in dem die Reste B' in Relation zu B im Unterschuss vorliegen. Dass dies wünschenswert sein kann, ist voranstehend beschrieben.

In einer zweiten Ausgestaltung der Erfindung wird der erste Schritt durch die Umsetzung einer Verbindung B"(OH), worin B" die obige Bedeutung besitzt, mit einem einen cyclischen Anhydrid-Rest enthaltenden Silan $[(CH_2)_n-C_2O_3-CH]-R-Si(X)_3$ umgesetzt, in dem R und X die fürdie Formeln (Ia), (Ib) und (II) angegebene Bedeutung besitzen. Vorzugsweise ist X eine Methoxy, Ethoxy-, Propoxy- oder Butoxygruppe. R kann beispielsweise eine Propylgruppe sein. Die Umsetzung kann ohne Lösungsmittel oder Katalysator und sollte vorzugsweise unter einer inerten Atmosphäre erfolgen; sie ist prinzipiell und am Beispiel der Umsetzung von Glycerin-1,3-dimethacrylat mit Triethoxysilylpropylbemsteinsäureanhydrid in der DE 44 16 857 C1 beschrieben.

In einer dritten Ausgestaltung der Erfindung wird der erste Schritt durch die Umsetzung einer Verbindung B"(OH), worin B" die obige Bedeutung besitzt, mit einem einen Oxiranring enthaltenden Silan $[CH_2-CH(O)]-R-Si(X)_3$ umgesetzt, in dem R und X die für die Formeln (Ia), (Ib) und (II) angegebenen Bedeutungen besitzen. vorzugsweise ist X eine Methoxy, Ethoxy-, Propoxy- oder Butoxygruppe. R kann beispielsweise $-CH_2-O-(CH_2)_3$ sein. Die Umsetzung erfolgt vorzugsweise in Gegenwart eines Katalysators wie oben erläutert und bei erhöhten Temperaturen gemäß dem folgenden Schema, das anhand des Beispiels einer Umsetzung von HEMA (Hydroxyethylmethacrylat) mit mit 3-Glycidyloxypropyltrimethoxysilan ("Glymo") gezeigt sei:

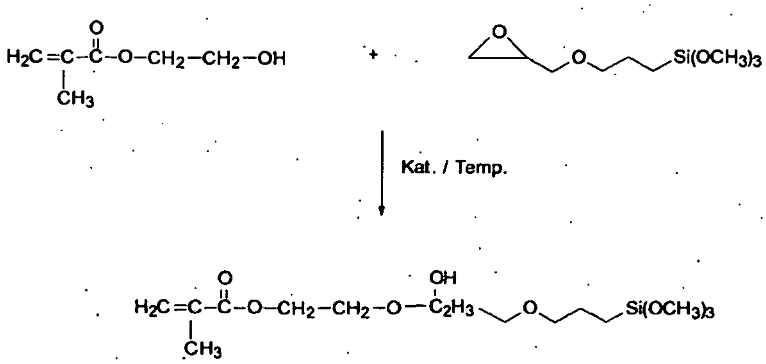


Wie voranstehend beschrieben, können auch bei dieser Umsetzung je nach Ausgangsmaterial nicht nur eine Verbindung der Formel (II), sondern auch oder sogar ausschließlich Kondensationsprodukte entstehen, beispielsweise durch Verlust eines Moleküls Alkohol unter Ausbildung von Brückenbindungen zwischen dem Sauerstoffatom der sich bildenden Hydroxygruppe (der Gruppe Y in Formel (II)) und einem Siliciumatom. Prinzipiell sind für diese Reaktion dementsprechend die folgenden Umesterungen möglich:

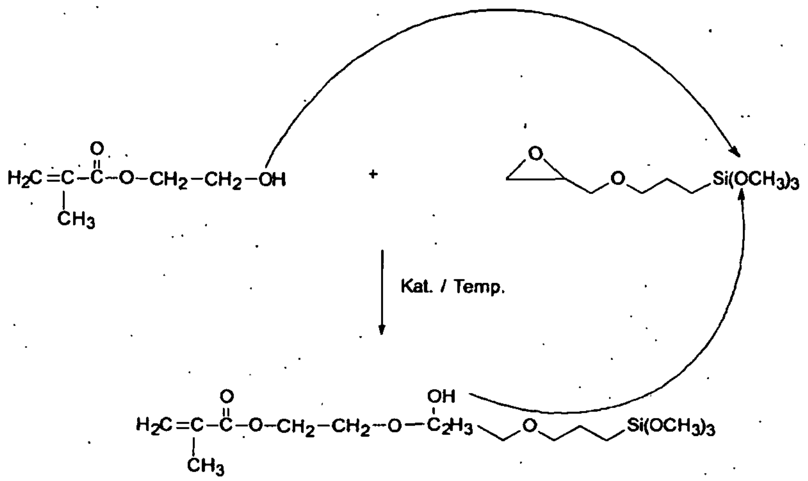


Der nächste Schritt der Herstellung der erfindungsgemäßen Kondensate erfolgt je nach gewünschtem Produkt gemäß den nachfolgend beschriebenen Varianten. In einer Variante (a) wird das Produkt des ersten Schrittes mit einer Verbindung B'NCO umgesetzt, worin B' die voranstehend genannte Bedeutung besitzt. Bedeutet Y im Produkt des ersten Schrittes OH, entsteht eine Verbindung mit der Formel (Ia) oder ein Kondensat mit dem Strukturelement (Ib), worin B'-Z' -B'-NHCOO- ist. Bedeutet Y im Produkt des ersten Schrittes COOH, entsteht eine Verbindung mit der Formel (Ia) oder ein Kondensat mit dem Strukturelement (Ib), worin B'-Z'- -B'-NH-C(O)- bedeutet. In einer Variante (b) wird das Produkt des ersten Schrittes, bei dem Y COOH bedeutet, mit einer Verbindung B'OH umgesetzt, worin B' die voranstehend genannte Bedeutung besitzt. Dabei entsteht ein Kondensat mit dem Strukturelement (I), in dem B'-Z'-B'-O-C(O)- bedeutet. In einer Variante (c) wird das Produkt des ersten Schrittes, bei dem Y OH bedeutet, mit einer Verbindung B"COOH oder einem entsprechenden aktivierten Säurederivat umgesetzt, worin B' die voranstehend genannte Bedeutung besitzt. Dabei entsteht ein Kondensat mit dem Strukturelement (I), in dem B'-Z' -B'-C(O)O- bedeutet. Es sei darauf hingewiesen, dass man mit der letztenannten Umsetzung auch zu Produkten gelangen kann, die bereits bekannt sind. So kann man beispielsweise durch Umsetzung eines Silans der Formel (II), in der B einen oder mehrere Acrylatreste oder Methacrylatreste enthält, mit einem aktivierten (Meth-)Acrylsäurederivat, z.B. dem Säurechlorid, einen weiteren (Meth-)Acrylsäurerest in dieses Silan einführen. Mehrere Methacrylatreste oder mehrere Acrylatreste enthaltende Silane sind jedoch auch auf andere Art und Weise erhältlich bzw. bekannt, weshalb sich der von der vorliegenden Anmeldung erstrebte Schutz nicht auf die enstprechenden Moleküle selbst erstrecken soll. Es muss aber betont werden, dass die genannte Umsetzung durch die erfindungsgemäß vorgeschlagene Nutzung der reaktiven OH-Gruppe (Y) in den Molekülen mit der Formel (II) zur Anbindung eines weiteren molekularen Bestandteils über eine Estergruppe zum einen einen sehr bequemen Weg darstellt, um bekannte oder unbekannte Oligo- oder Poly(meth-)acrylat-Silane herzustellen, zum anderen aber auch geeignet ist, Verbindungen zur Verfügung zu stellen, die bisher nicht erhältlich waren bzw. nicht synthetisiert wurden, weil der Reaktionsweg zu umständlich wäre.

Der zweistufige Syntheseweg der erfindungsgemäßen Silane sei nachstehend anhand einiger Schemata nochmals verdeutlicht:

**1. Carboxy funktionalisiertes Dimethacrylat aus DE 4416857**

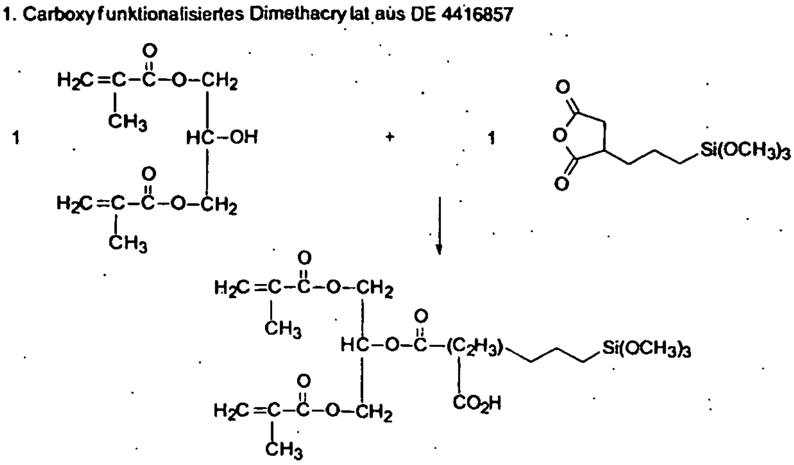

1a. Umsetzung obiger Carboxyfunktionalisierter Dimethacrylate

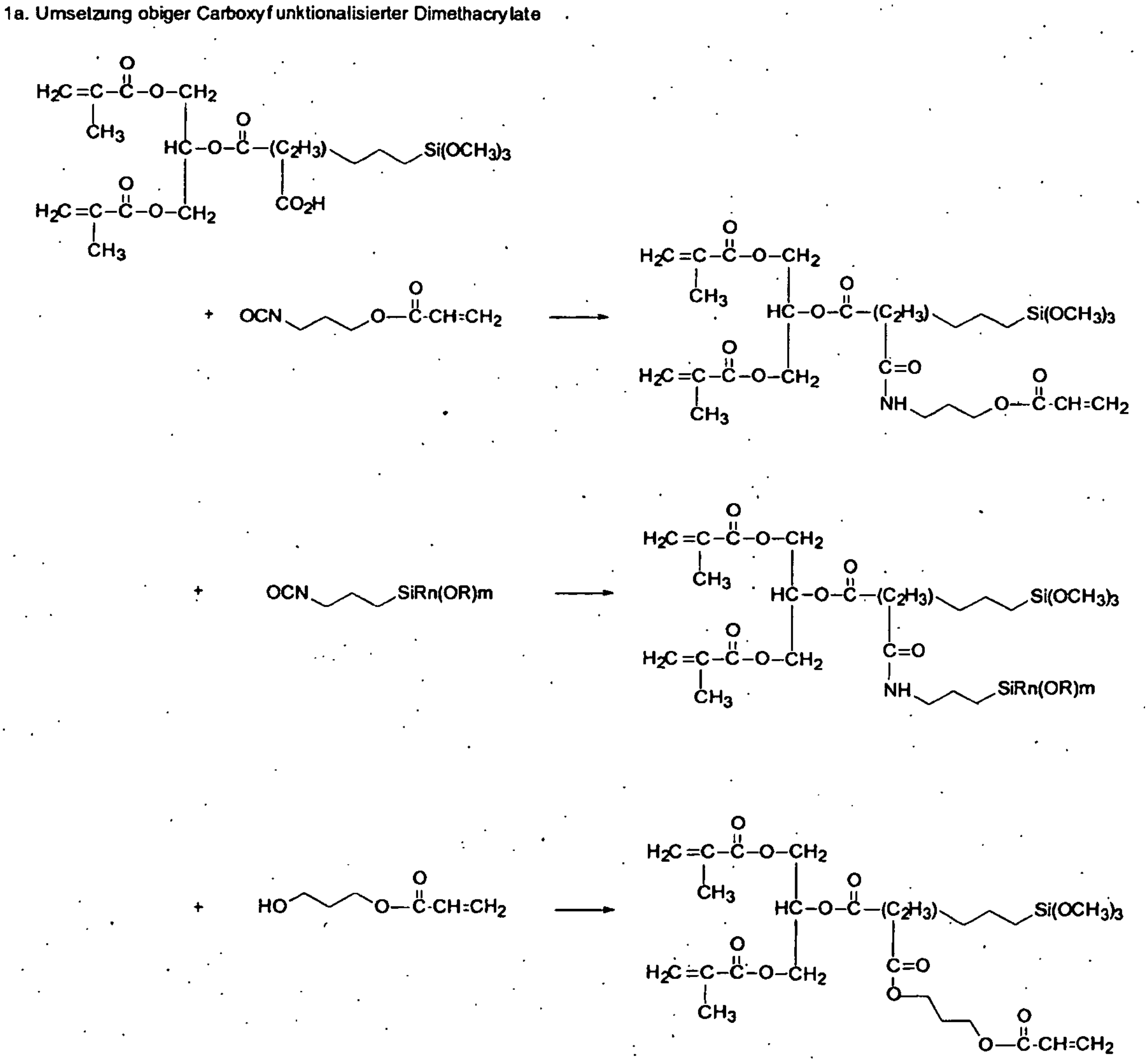

2. Hydroxyfunktionalisiertes Dimethacrylat aus DE 4416857

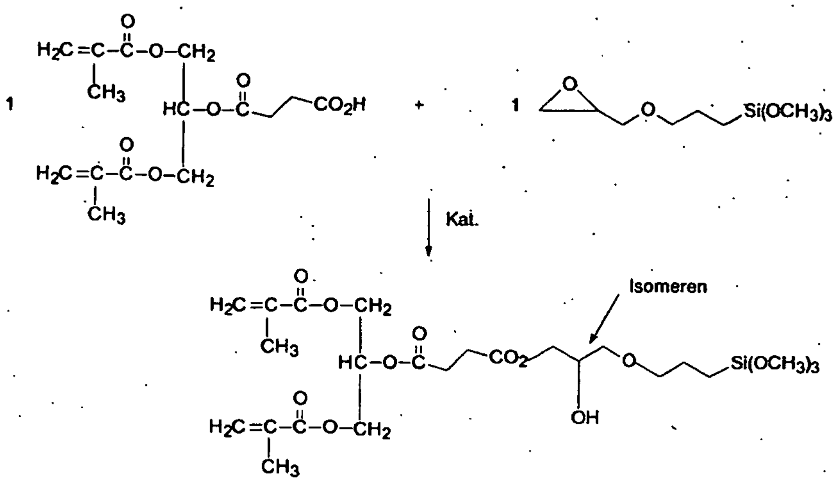

2a. Umsetzung obiger Hydroxyfunktionalisierter Dimethacrylate

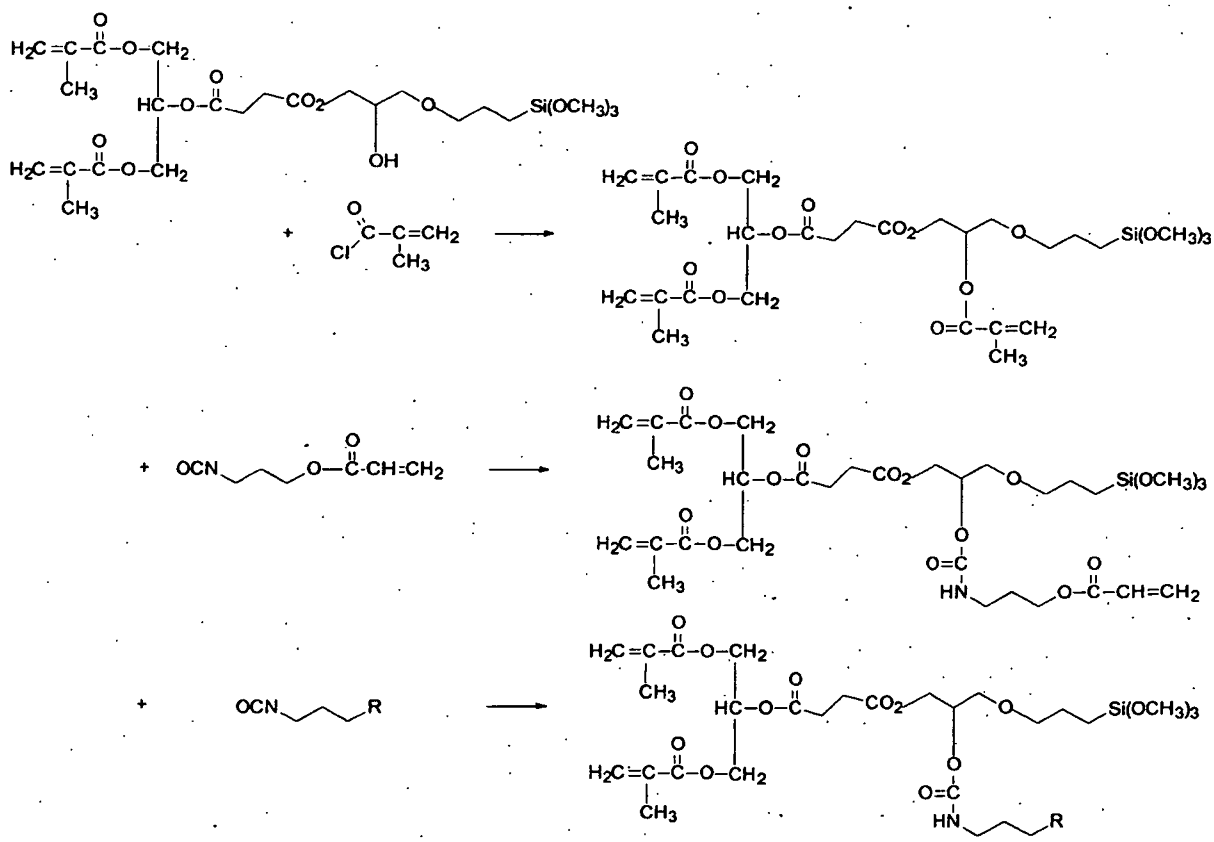

3. Hydroxyfunktionalisiertes Dimethacrylat aus DE 4416857

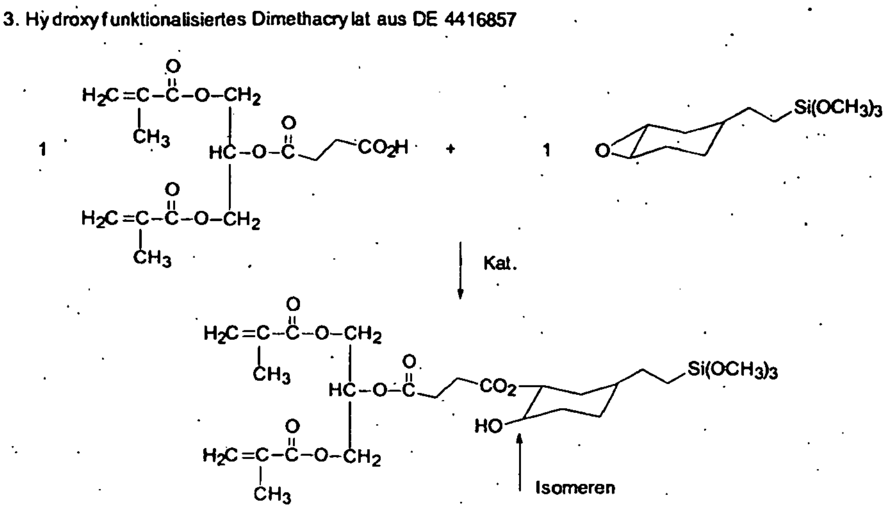

3a. Umsetzung obiger Hydroxyfunktionalisierter Dimethacrylate

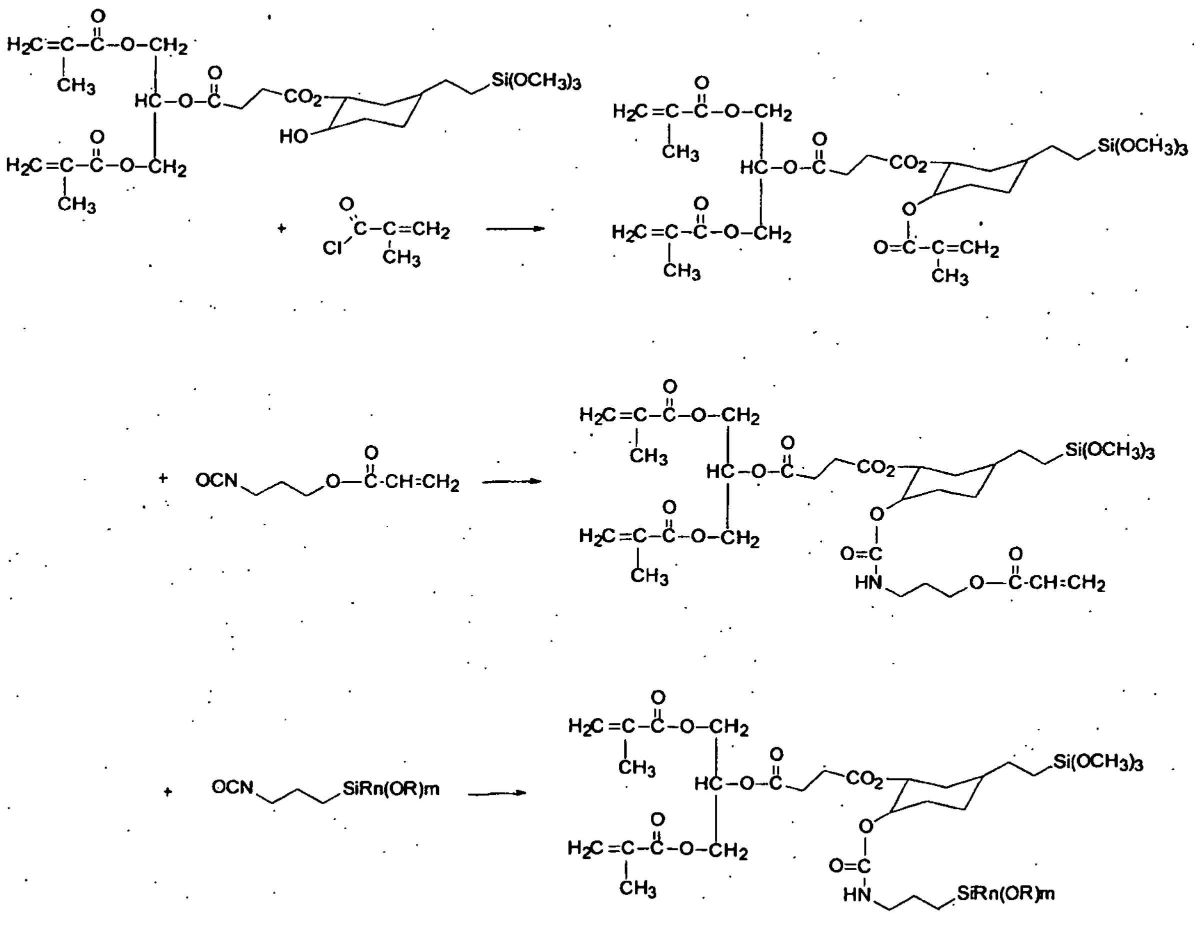

Nachstehend sei die Erfindung außerdem anhand einiger ausgewählter Umsetzungen illustriert:

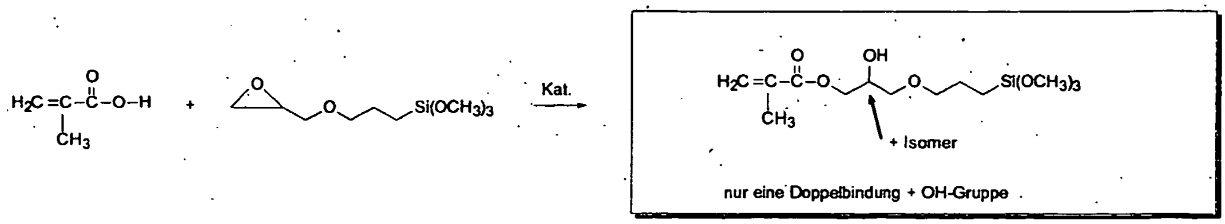
Kat.
+ Isomer
nur eine Doppelbindung + OH-Gruppe

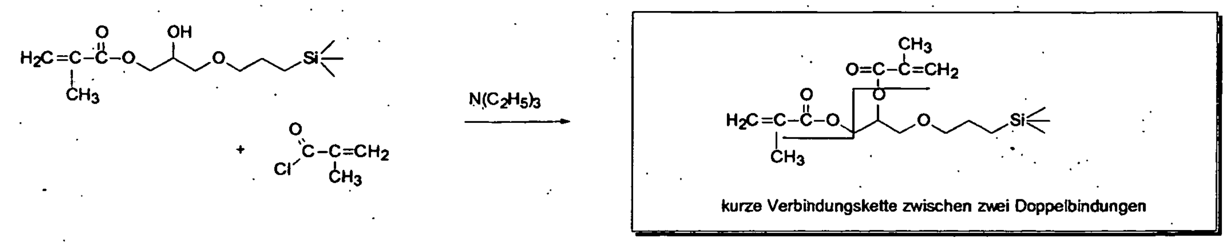
N(C2H5)3
kurze Verbindungskette zwischen zwei Doppelbindungen

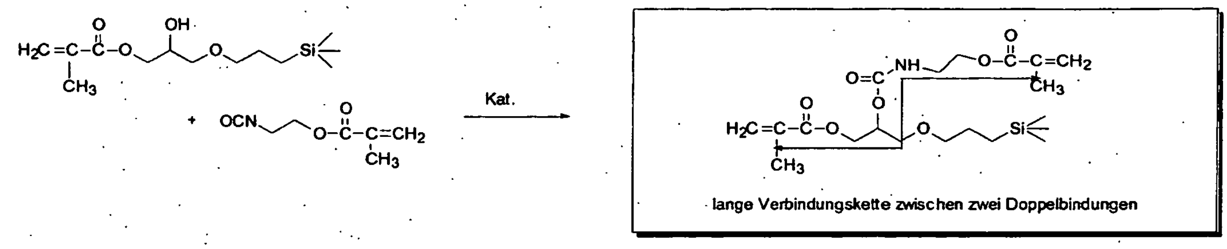
Kat.
lange Verbindungskette zwischen zwei Doppelbindungen

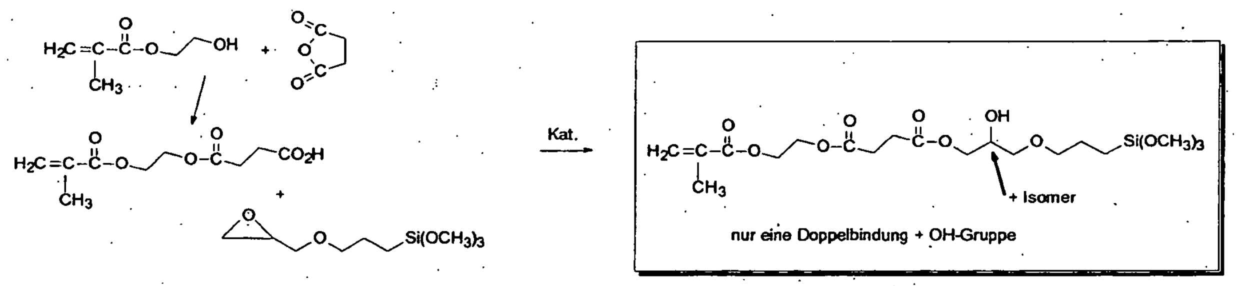
Kat.
+ Isomer
nur eine Doppelbindung + OH-Gruppe

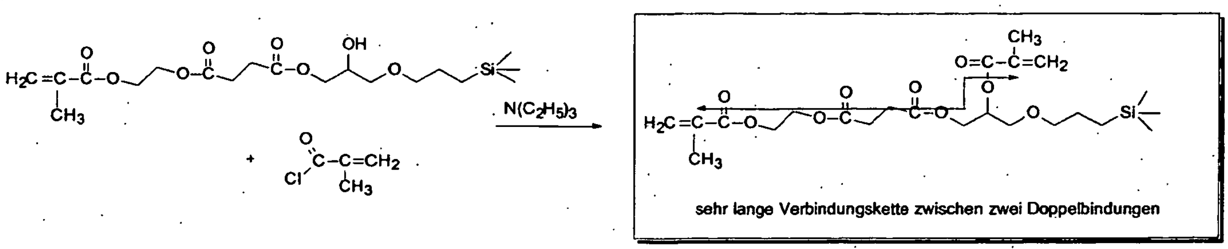
N(C2H5)3
sehr lange Verbindungskette zwischen zwei Doppelbindungen

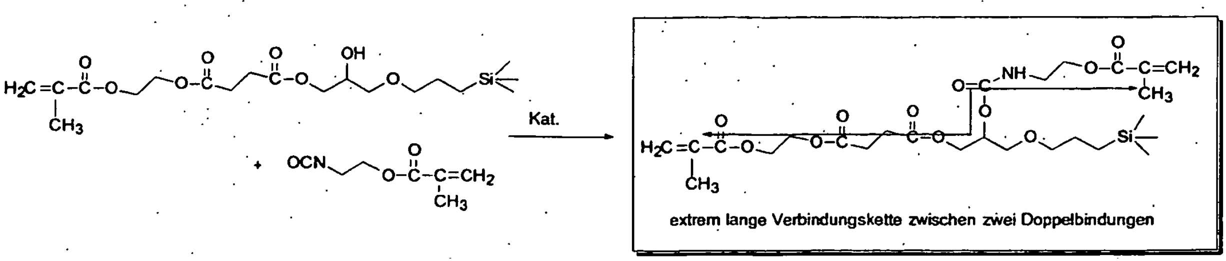
Kat.
extrem lange Verbindungskette zwischen zwei Doppelbindungen

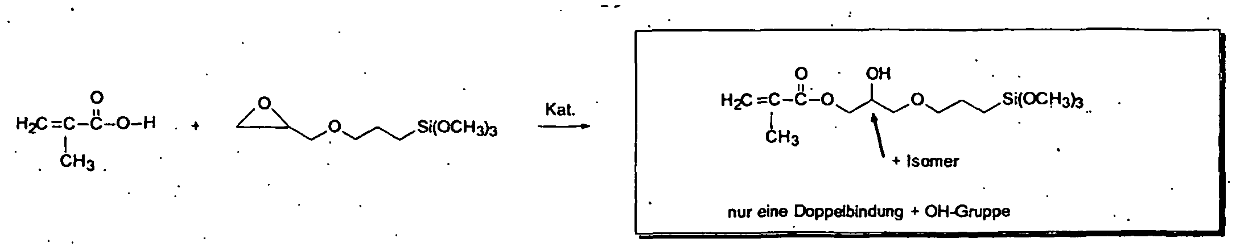


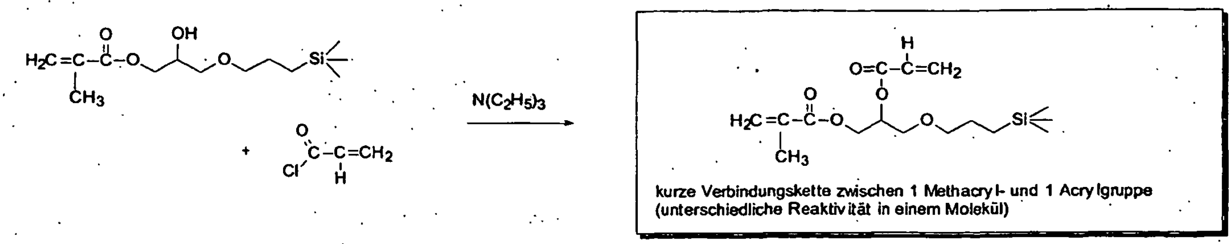


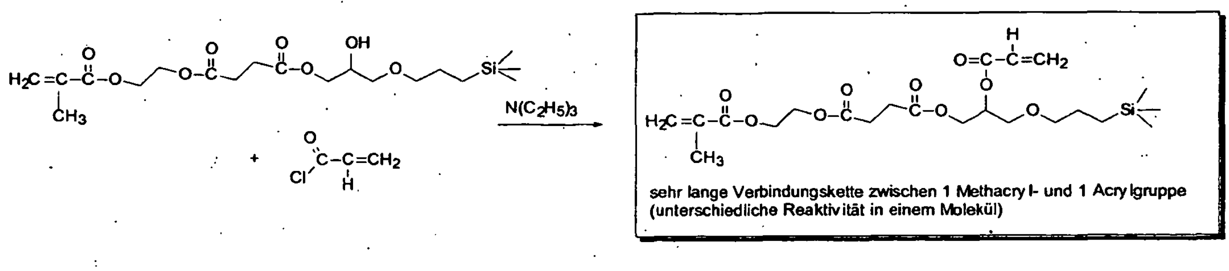


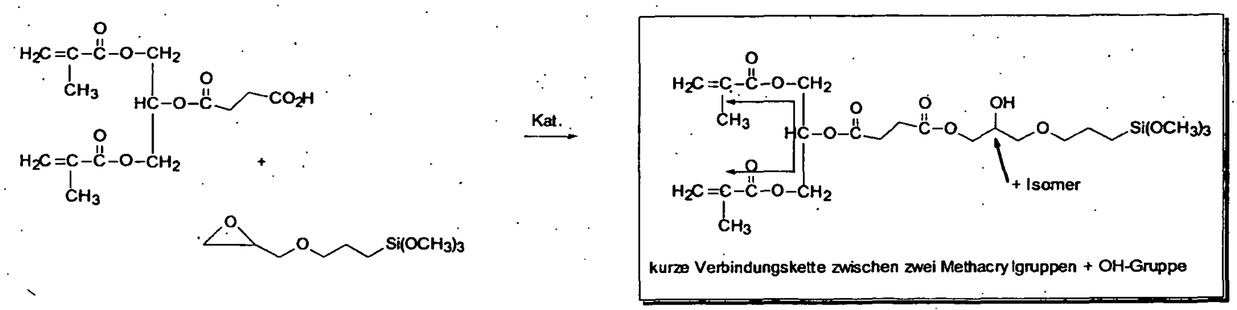


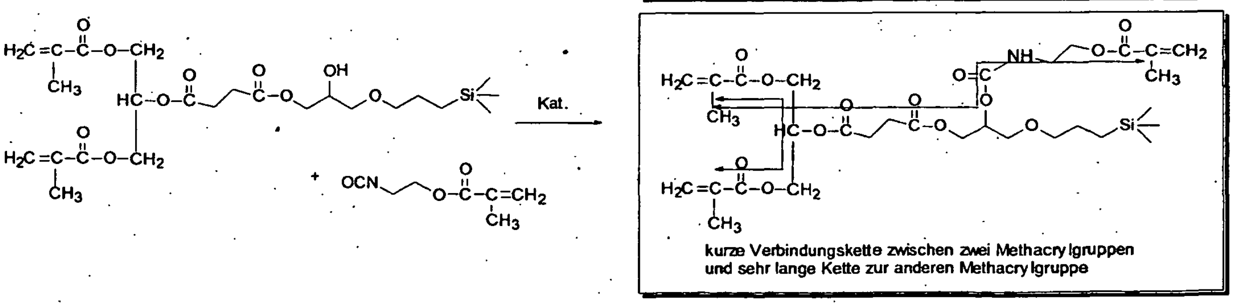


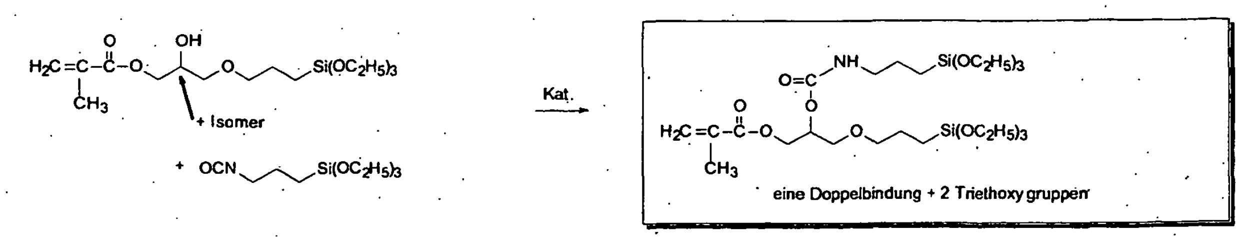


Die voranstehenden Schemata zeigen, dass sich erfindungsgemäß sehr variabel gebaute Silane erzeugen lassen. So können aus dem Produkt der Umsetzung von (Meth-)Acrylsäure mit Glymo, das aus der DE 44 16 857 C1 bekannt ist, Silane der Formel (Ia) hergestellt werden, die je nach eingesetztem Reaktionspartner relativ lange oder relativ kurze Verbindungsketten zwischen den Doppelbindungen der Reste B und B' ausweisen (siehe obere Hälfte der

ersten Schemaseite, wobei darauf hingewiesen wird, dass die gezeigten Reaktionswege beispielhaft die Möglichkeiten der Erfindung aufzeigen sollen, aber nicht in allen Fällen zu Produkten führen müssen, die neu sind). Aus dem vorgenannten deutschen Patent ist auch das Produkt der Umsetzung von Hydroxyethylmethacrylat (HEMA), Bernsteinsäureanhydrid und Glymo bekannt. Dieses Produkt enthält einen einzigen Methacrylsäurerest sowie eine retativ weit entfernt davon stehende Hydroxygruppe. Daraus lassen sich erfindungsgemäß Verbindungen mit zwei doppelbindungshaltigen Gruppen herstellen, zwischen denen sehr lange bzw. extrem lange Verbindungsketten angeordnet sind. (siehe untere Hälfte der ersten Schemaseite; für die Produkte gilt das oben gesagte). Die Möglichkeit, erfindungsgemäß auf relativ einfache Weise zu Verbindungen mit unterschiedlichen Resten B und B' zu gelangen, und zwar mit variablen Abständen zwischen den doppelbindungshaltigen Resten B und B', zeigen die Schemata auf der oberen Hälfte der zweiten Seite. Unterschiedliche Reste B und B' in den Molekülen verleihen deren organischem Teil eine gestufte Reaktivität, die u.a. eine z.B. für Photostrukturierungen nutzbare zweistufige organische Polymerisation ermöglichen (1. Stufe: Polymerisation der Reste B bzw. B' unter Erhalt eines noch nicht vollständig ausgehärteten Polymerisats oder Komposits, das/der einer weiteren Bearbeitung oder Phötostrukturierung zugänglich ist; endgültige Vernetzung und Aushärtung durch die 2. Stufe der Polymerisation der Reste B' bzw. B). In der Mitte dieser Seite ist die Herstellung von Verbindungen mit zwei recht nahe beieinanderstehenden, doppelbindungshaltigen Gruppen (hier Methacrylatgruppen) sowie einer dritten, von diesen weiter entfernt angeordneten doppelbindungshaltigen Gruppe (hier ebenfalls eine Methacrylatgruppe, diese könnte jedoch auch eine andere doppelbindungshaltige Gruppe sein) anhand eines Beispiels gezeigt. Der untere Teil dieser Seite gibt ein Beispiel, wie man in einfacher Weise erfindungsgemäß zu Verbindungen gelangt, die an verschiedene Siliciumatome gebundene Reste mit identischer Reaktivität aufweisen. Würde man in diesem Beispiel die Ethoxygruppe des Isocyanatsilans oder der Verbindung gemäß Formel (II) gegen eine andere hydrolyseempfindliche Gruppe mit anderen Hydrolyse-Reaktivitäten austauschen, würde man eine Verbindung der Formel (I) erhalten, die unterschiedliche Abgangsgruppen an zwei verschiedenen Siliciumatomen aufweist und damit einer gestuften Hydrolyse- und Kondensationsreaktion zugänglich wäre. Eine solche gestufte Reaktivität ist z.B. für eine einfach gesteuert zweistufige Hydrolyse- und Kondensationsreaktion nutzbar, wobei auf in derartigen Fällen sonst anzuwendende Vorsichtsmaßnahmen verzichtet werden kann. Insgesamt zeigt sich an diesen Beispielen, dass eine Zweistufigkeit im Bereich der anorganischen Vernetzung und damit der Herstellung von verarbeitbaren Harzen und/oder im Bereich der organischen Vernetzung und damit im Bereich der Endbearbeitung möglich ist.

Die erfindungsgemäßen Silane sowie noch nicht vollständig durchkondensierte Kieselsäurepoly(teil)kondensate können allein oder ggf. auch mit weiteren Silanen und/oder Kieselsäure(teil)kondensaten teilweise, weiter oder vollständig hydrolysiert und kondensiert werden. Hierfür eignen sich zum einen Silane und (Teil-)Vorkondensate daraus, die cokondensierbar, aber nicht copolymerisierbar sind, oder solche, die ebenfalls über polymerisierbare Gruppen verfügen. Selbstverständlich lassen sich die weiteren Komponenten auch bereits in einem früheren Stadium einarbeiten, wenn sie nicht mit Isocyanaten oder anderen reaktiven Komponenten unerwünschte Nebenreaktionen eingehen können. Dabei entstehen Kondensate mit ausschließlich den erfindungsgemäßen Struktureinheiten der Formel (Ib) oder anorganische Netzwerk mit Si-O-Si-Einheiten, die diese Struktureinheiten in Kombination mit anderen Einheiten enthalten. Wenn B' eine bereits einkondensierte oder einkondensierbare Silangruppe enthält, lässt sich ein Kondensat mit einer besonders dichten Si-O-Si-Struktur erhalten.

Den erfindungsgemäßen Silanen sowie noch nicht vollständig durchkondensierten Kieselsäurepoly(teil) kondensaten können statt dessen oder zusätzlich copolymerisierbare Komponenten zugesetzt werden, bei denen es sich z.B. um radikalisch und/oder ionisch und/oder kovalent-nucleophil polymerisierbare Verbindungen handelt. Radikalisch polymerisierbare Verbindungen, die zugesetzt werden können, sind z.B. solche mit C=C-Doppel-bindungen, wie z.B. Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch ringöffnend polymerisierbar sind, wie z.B. Spiroorthoester; Spiroorthocarbonate, bicyclische Spiroorthoester, Mono- oder Oligoepoxide oder Spirosilane, wie sie z.B. aus der DE 41 25 201 C1 bekannt sind. Es können aber auch Verbindungen zugesetzt werden, die sowohl ionisch als auch radikalisch polymerisierbar sind, wie z.B. Methacryloyl-Spiroorthoester. Diese sind radikalisch über die C=C-Doppelbindung und kationisch unter Ringöffnung polymerisierbar. Die Herstellung dieser Systeme ist z.B. im Journal f. prakt. Chemie, Band 330, Heft 2, 1988, S. 316-318 beschrieben. Ferner ist es z.B. möglich, andere bekannte Silangebundene cyclische Systeme zuzusetzen, die mit einpolymerisiert werden können. Solche Systeme sind z:B. solche, die Epoxide enthalten. Solche Systeme sind bei der Herstellung der Spiro-Silane in der DE 41, 25, 201 C1 beschrieben. Die vorgenannten Komponenten werden bei der Polymerisation der Harze über ihre organisch polymerisierbaren Gruppen einpolymerisiert, so dass man ein Copolymerisat aus erfindungsgemäßen Silanen und Copolymeren erhalten kann, dessen Silangruppen untereinander oder mit weiteren Gruppen hydrolytisch (teil-)kondensiert vorliegen.

Die erfindungsgemäßen Kieselsäurepoly(teil)kondensate besitzen vor allem dann, wenn Y vollständig oder zu hohen Anteilen umgesetzt ist, eine niedrige Matrixhydrophilie und nehmen dementsprechend in feuchter/nasser Umgebung nur wenig Wasser auf. Ihre Nassfestigkeit ist verbessert, Die Reste B und B' lassen sie sich allein oder in Mischungen und/oder Cokondensaten mit weiteren Bestandteilen wie den oben erwähnten in organische Polymerstrukturen einbauen, oder sie können über diese Gruppen als solche vernetzt werden. Aufgrund der zusätzlichen Silylgruppe und gegebenenfalls zusätzlicher organischer, vernetzbarer Gruppen, die B' trägt, lässt sich eine generelle Steigerung der Festigkeit der vernetzten Produkte erzielen. Deshalb eignen sich die erfindungsgemäßen Kondensate z.B. als bzw. zur Herstellung von Beschichtungs-, Füll-, Klebe-, Verguss- und Dichtungsmassen, Fasern, Partikeln, Folien, Bindemittel für keramische Partikel, oder als Einbettmassen, aus denen sich sehr kratzfeste Beschichtungen und Formkörper mit hoher Festigkeit fertigen lassen. Insbesondere kann man ungefüllte Polymermassen (Polymerisate) sowie (gefüllte) Komposite erhalten, die aus Harzen mit relativ geringer Viskosität erhalten wurden und die eine sehr geringe Schrumpfung aufweisen. Es sei auch auf solche Ausgestaltungen verwiesen, in denen die Harze bzw. Polymerisate oder Komposite monomerfrei und damit toxikologisch/ allergologisch unbedenklich sind, vor allem, wenn sie darüber hinaus eine hohe Nassfestigkeit besitzen (siehe oben).

In einer speziellen Ausgestaltung der Erfindung wird das Kieselsäurepoly(teil)kondensat vor der organischen Aushärtung mit einem oder mehreren Zusatz- und/oder Füllstoffe gemischt. Beispiele für Füllstoffe sind aus der Literatur bekannt. Verwendbar sind z.B. Makrofiller (z.B: aus Glas, Keramik oder Quartz, Teilchengrößen zwischen 2 bis 50 µm), aber auch andere Füllstoffe aus verschiedenen Materialien und mit ggf. deutlich geringeren Durchmessern, darunter z.B. Hybridfiller oder Feinsthybridfiller. Vor allem bei Einsatz von Füllstoffen aus Glasmaterialien wie Glasfasern oder Glaspartikeln erhält man Komposite, die nach organischer Aushärtung einen nur minimalen Schrumpf aufweisen. Beispiele für sonstige Zusatzstoffe sind Färbemittel (Farbstoffe oder Pigmente), Oxidationsinhibitoren, Verlaufsmittel, UV-Absorber, Stabilisatoren oder Zusätze zur Erhöhung der Leitfähigkeit (z.B. Graphitpulver, Silberpulver).

Nachstehend soll die Erfindung anhand von Ausführungsbeispielen näher erläutert werden.

## Beispiel 1 (nicht erfindungsgemäß)

Dieses Beispiel erläutert die Herstellung einer Verbindung der Formel (II) mit b gleich 0:

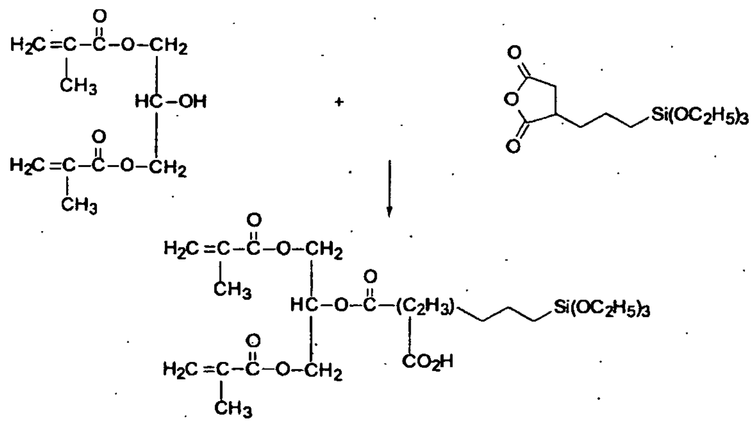

Zur Vorlage von 12,7 g (0,05 mol) Glycerin-1,3-dimethacrylat werden unter trockener Atmosphäre 17,0 g (0,05 mol) Triethoxysilylpropylbernsteinsäureanhydrid zugetropft. Die Umsetzung kann über die Abnahme der Anhydrid-Carbonylbande

$\nu_{as(C=O)} = 1786\ cm^{-1}$, $\nu_{sy(C=O)} = 1864\ cm^{-1}$

verfolgt werden. Da ein Katalysator bzw. Lösungsmittel nicht zugesetzt werden muss, wird nach vollständiger Reaktion das gewünschte Produkt (flüssig) erhalten und kann ohne Reinigung für weitere Umsetzungen verwendet werden.

## Beispiel 2 (nicht erfindungsgemäß)

Auch dieses Beispiel erläutert die Herstellung einer Verbindung der Formel (II) mit b gleich 0:

Umsetzung von 3-Glycidyloxypropyltrimethoxysilan (Glymo) mit Methacrylsäure (MAS)

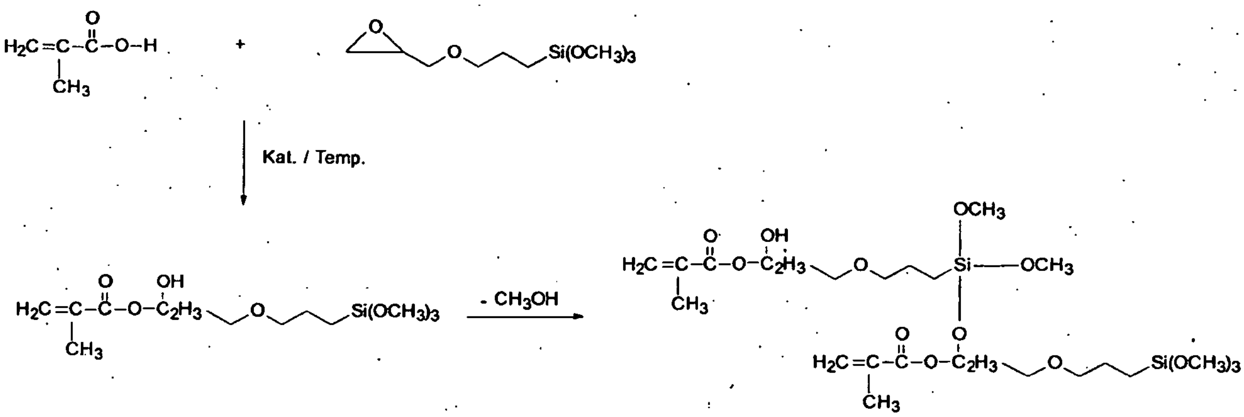


Zur Vorlage von 143,2 g (0,606 mol) 3-Glycidyloxypropyl-trimethoxysilan werden unter trockener Atmosphäre (Sauerstoff) ein Additionskatalysator, BHT als Stabilisator und anschließend 56,82 g (0,660 mol) Methacrylsäure zugetropft und bei ca. 80 °C gerührt (ca. 24 h). Die Umsetzung kann über die Abnahme der Carbonsäurekonzentration mittels Säuretitration sowie dem Epoxidumsatz mittels Ramanspektroskopie/Epoxidtitration verfolgt werden. Die für die Epoxidgruppe charakteristische Bande erscheint im Ramanspektrum bei 1256 $cm^{-1}$. Der Epoxid- bzw. Carbonsäureumsatz liegt bei ≥ 99 % bzw. ≥ 88 % (Folge des Carbonsäureüberschusses).

**Beispiel 3 (nicht erfindungsgemäß)**

Dieses Beispiel zeigt die Herstellung einer Verbindung der Formel (II) bzw. eines Umesterungsproduktes davon mit b gleich 1:

Umsetzung von 3-Glycidyloxypropylmethydiethoxysilan mit Methacrylsäure (MAS):

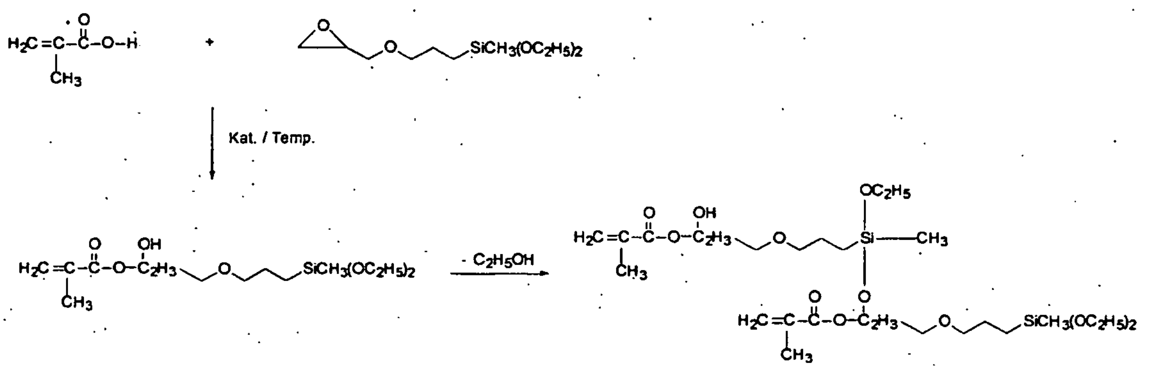


Zur Vorlage von 125,0 g (0,503 mol) 3-Glycidyloxypropyl-methyldimethoxysilan werden unter trockener Atmosphäre (Sauerstoff) ein Additionskatalysator, BHT als Stabilisator und anschließend 47,35 g (0,550 mol) Methacrylsäure zugetropft und bei 80 C gerührt (ca. 24 h). Die Umsetzung kann über die Abnahme der Carbonsäurekonzentration mittels Säuretitration sowie dem Epoxidumsatz mittels Ramanspektroskopie/Epoxidtitration verfolgt werden. Die für die Epoxidgruppe vom Epoxysilan charakteristische Bande erscheint im Ramanspektrum bei 1256 $cm^{-1}$. Der Epoxid- bzw. Carbonsäureumsatz liegt bei ≥ 99 % bzw. ≥ 89 % (Folge des Carbonsäureüberschusses).

**Beispiel 4 (nicht erfindungsgemäß)**

Dieses Beispiel zeigt die Hydrolyse- und Kondensationsreaktion des Produktes aus Beispiel 2:

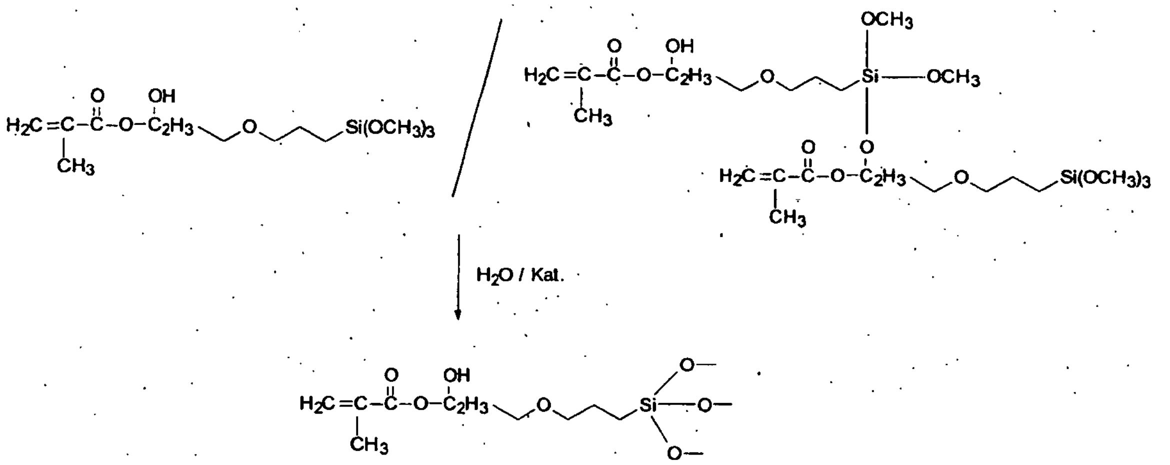


Nach Zugabe von Essigester (1000 ml/mol Silan) und $H_2O$ zur Hydrolyse mit $NH_4F$ als Kat. wird bei RT gerührt. Der Verlauf der Hydrolyse wird jeweils durch Wassertitration verfolgt. Die Aufarbeitung erfolgt nach ca. 2 -tägigem Rühren bei RT durch mehrmaliges Ausschütteln mit wäßriger NaOH und anschließendem Ausschütteln mit Wasser und Filtration über hydrophobierten Filter. Nach Zusatz von BHT und 0,02 mol 1,6-Hexandiol-dimethacrylat wird zunächst bei 40 °C abrotiert und anschließend mit Ölpumpenvakuum abgezogen, um Alkohol- und Wasserreste zu entfernen. Es resultiert ein flüssiges Harz mit einer Viskosität von ca. 15 - 19 Pa·s bei 25 °C (stark abhängig von den genauen Hydrolyse- und Aufarbeitungsbedingungen) und 0,00 mmol $CO_2H$/g (keine freien Carboxylgruppen mehr).

**Beispiel 5**

Das Produkt des Beispiels 1 wurde in vergleichbarer Weise hydrolysiert und aufgearbeitet.

**Beispiel 6 (nicht erfindungsgemäß)**

Dieses Beispiel zeigt die Hydrolyse- und Kondensationsreaktion des Produktes aus Beispiel 3.

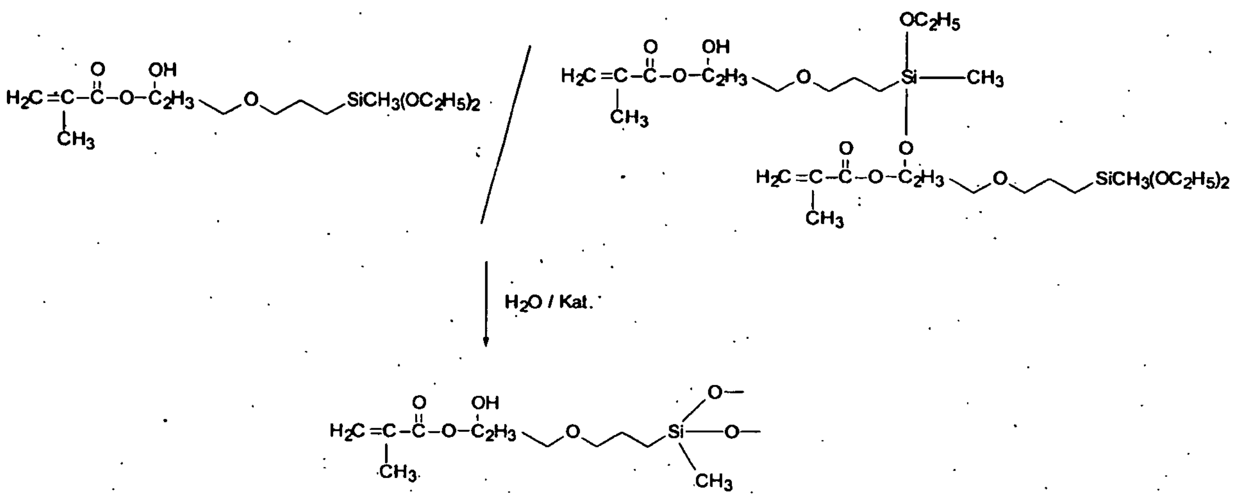


Nach Zugabe von Essigester (1000 ml/mol Silan) und $H_2O$ zur Hydrolyse mit HCl als Kat. wird bei 30 °C gerührt. Der Verlauf der Hydrolyse wird jeweils durch Wassertitration verfolgt. Die Aufarbeitung erfolgt nach mehrtägigem Rühren durch mehrmaliges Ausschütteln mit wäßriger NaOH und anschließendem Ausschütteln mit Wasser und Filtration über einen hydrophobierten Filter. Es wird zunächst abrotiert, dann werden restliche Lösemittel (Alkohol, Wasser ...) im Ölpumpenvakuum abgezogen. Es resultiert ein flüssiges Harz ohne Einsatz von Reaktivverdünneren (Monomeren) mit einer sehr geringen Viskosität von ca. 4 - 6 Pa·s bei 25 °C und 0,00 mmol $CO_2H$/g (= keine freien Carboxylgruppen mehr).

**Beispiel 7 (nicht erfindungsgemäß)**

Dieses Beispiel zeigt die Addition eines Isocyanats im Unterschuss an die Hydroxygruppe des Produktes von Beispiel 4.

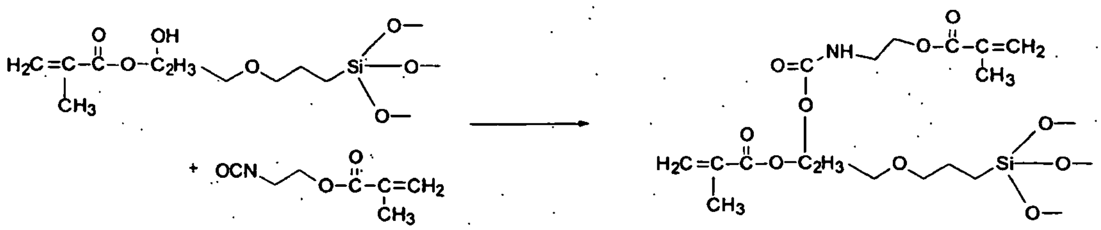

Zur Vorlage von 18,6 g (0,06 mol) obigen Harzes werden unter trockener Atmosphäre (Sauerstoff) bei RT unter Rühren 6,52 g (Unterschuss: 0,042 mol) Methacrylsäureisocyanatoethylester zugetropft und bei RT gerührt (ca. 3 h). Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Nach 1 h Ölpumpenvakuum resultiert ein zähflüssiges Harz.

IR-Daten: $\nu_{(OH \leftarrow Edukt)}$ ~ 3500 $cm^{-1}$ (Rest-OH, da nur mit 0,7 Molanteilen Methacrylsäure-isocyanatoethylester umgesetzt wurde)
$\nu_{(NH \leftarrow Urethan)}$ ~ 3370 $cm^{-1}$
$\nu_{(C=O \leftarrow Methacrylat/Urethan)}$ ~ 1721 $cm^{-1}$
$\nu_{(C=C \leftarrow Methacrylat)}$ ~ 1638 $cm^{-1}$

**Beispiel 8 (nicht erfindungsgemäß)**

Dieses Beispiel zeigt die Addition eines Isocyanats an das Produkt aus Beispiel 5

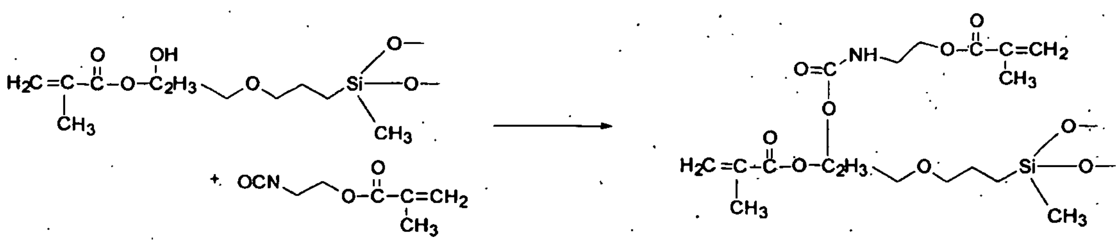

Zur Vorlage von 21,2 g (0,08 mol) obigen Harzes werden unter trockener Atmosphäre (Sauerstoff) bei RT unter Rühren 8,69 g (0,056 mol) Methacrylsäureisocyanatoethylester zugetropft und bei 30 °C gerührt. Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Es resultiert ein zähflüssiges Harz mit einer Viskosität von ca. 18 -20 Pa·s bei 25 C (stark abhängig von den genauen Synthese- und Aufarbeitungsbedingungen insbesondere auch der Vorstufen).

IR-Daten: $\nu_{(OH \leftarrow Edukt)}$ ~ 3500 $cm^{-1}$ (Rest-OH, da nur mit 0,7 Molanteilen Methacrylsäure-isocyanatoethylester umgesetzt wurde)
$\nu_{(NH \leftarrow Urethan)}$ ~ 3373 $cm^{-1}$
$\nu_{(C=O \leftarrow Methacrylat/Urethan)}$ ~ 1721 $cm^{-1}$
$\nu_{(C=C \leftarrow Methacrylat)}$ ~ 1638 $cm^{-1}$

**Beispiel 9 (nicht erfindungsgemäß)**

Dieses Beispiel beschreibt die Polymerisation der organisch polymerisierbaren Gruppen des Kondensates aus Beispiel 7.

Harz aus Beispiel 7 mit 1% Lucirin TPO wird in eine Stäbchenform (2 x 2 x 25 $mm^3$) gegeben. Die Methacrylatgruppen werden im Rahmen einer photoinduzierten radikalischen Polymerisation umgesetzt, wobei das Harz aushärtet. Mittels 3-Punktbiegeversuch wird nach 1,5 Tagen Lagerung unter Luft bzw. Wasser bei 40 °C das E-Modul sowie die Bruchfestigkeit der resultierenden Stäbchen bestimmt.

| | |
|---|---|
| E-Modul | = 2,80 GPa (Luft) / 2,50 GPa (Wasser) |
| Bruchfestigkeit | = 109 MPa (Luft) / 89 MPa (Wasser) |

Mittels Auftriebsmethode werden die folgenden Schrumpfungswerte im Rahmen einer photoinduzierten radikalischen Polymerisation erhalten:

4,3 Vol.-% / 5,3 Vol.-% nach Lagerung von 15 min / 1 Tg

Es resultieren somit ausgezeichnete Daten, weshalb das Produkt z.B. als Matrixsystem für zu verschiedenen Zwecken einsetzbare Komposite verwendet werden kann.

**Vergleichsbeispiel 1:**

Harz aus Beispiel 4 mit 1 % Lucirin TPO wird in eine Stäbchenform (2 x 2 x 25 $mm^3$) gegeben. Die Methacrylatgruppen werden im Rahmen einer photoinduzierten radikalischen Polymerisation umgesetzt, wobei das Harz aushärtet. Mittels 3-Punktbiegeversuch wird nach 1,5 Tagen Lagerung unter Luft bzw. Wasser bei 40 °C das E-Modul sowie die Bruchfestigkeit der resultierenden Stäbchen bestimmt.

| | |
|---|---|
| E-Modul | = 2,21 GPa (Luft) / 1,64 GPa (Wasser) |
| Bruchfestigkeit | = 89 MPa (Luft) / 55 MPa (Wasser) |

Mittels Auftriebsmethode werden die folgenden Schrumpfungswerte im Rahmen einer photoinduzierten radikalischen Polymerisation erhalten:

5,3 Vol.-% / 6,4 Vol.-% nach Lagerung von 15 min / 1 Tg

Es resultieren erwartungsgemäß deutlich geringere mechanische Kenndaten (verursacht durch die Anwesenheit nur einer Doppel-bindung pro Silaneinheit), ein deutlich stärkerer Abfall durch Wasserlagerung und überraschenderweise eine um ca. 1 Vol.-% höhere Schrumpfung als auf Basis des Harzsystems des Beispiels 6.

**Beispiel 10 (nicht erfindungsgemäß)**

Dieses Beispiel zeigt die Herstellung eines Komposits auf Basis des Harzsystems aus Beispiel 6

In das Harz aus Beispiel 6 werden 1 % Lucirin TPO gelöst, und eine Füllstoffmischung (77 Gew.-%), bestehend aus einem Feinstglas (silanisiert) von der Fa. Schott (durchschnittlich ca. 3 μm Durchmesser) und Aerosil 8200 (teilsilanisiert) (von der Fa. Degussa), wird eingearbeitet. Das resultierende, gut verarbeitbare Komposit wird in eine Stäbchenform (2 x 2 x 25 $mm^3$) gegeben und im Rahmen einer photoinduzierten radikalischen Polymerisation ausgehärtet. Mittels 3-Punktbiegeversuch wird nach 1,5 Tagen Lagerung unter Luft bzw. Wasser bei 40 °C das E-Modul sowie die Bruchfestigkeit der resultierenden Stäbchen bestimmt.

| | |
|---|---|
| E-Modul | = 13,3 GPa (Luft) / 12,4 GPa (Wasser) |
| Bruchfestigkeit | = 145 MPa (Luft) / 135 MPa (Wasser) (Einzelwerte jeweils noch deutlich höher) |

Im Rahmen einer photoinduzierten radikalischen Polymerisation werden die folgenden Schrumpfungswerte erhalten:

Mittels Auftriebsmethode → 2,1 Vol.-% / 2,4 Vol.-% nach Lagerung von 15 min / 1 Tg

Es resultieren somit ausgezeichnete Daten schon mit einer nicht optimierten Standardfüllstoffmischung bei vergleichsweise noch geringem Füllstoffgehalt.

**Beispiel 11 (nicht erfindungsgemäß)**

Dieses Beispiel beschreibt die Polymerisation der organisch polymerisierbaren Gruppen des Kondensates aus Beispiel 8

Harz aus Beispiel 8 mit 1% Lucirin TPO wird in eine Stäbchenform (2 x 2 x 25 $mm^3$) gegeben. Die Methacrylatgruppen werden im Rahmen einer photoinduzierten radikalischen Polymerisation umgesetzt, wobei das Harz aushärtet. Mittels 3-Punktbiegeversuch wird nach 1,5 Tagen Lagerung unter Luft bzw. Wasser bei 40 °C das E-Modul sowie die Bruchfestigkeit der resultierenden Stäbchen bestimmt.

| | |
|---|---|
| E-Modul | ca. 2,30 GPa (Luft) / 2,10 GPa (Wasser) |
| Bruchfestigkeit | ca. 104 MPa (Luft) / 82 MPa (Wasser) |

Mittels Auftriebsmethode werden die folgenden Schrumpfungswerte im Rahmen einer photoinduzierten radikalischen Polymerisation erhalten:

4,3 Vol.-% / 5,1 Vol.-% nach Lagerung von 15 min / 1 Tg

Es resultieren somit ausgezeichnete Daten, weshalb ein Einsatz z. B. als monomerfreies Matrixsystem für Komposite möglich ist.

**Vergleichskieispiel 2:**

Das Kondensat aus Beispiel 5 mit 1% Lucirin TPO wird in eine Stäbchenform (2 x 2 x 25 $mm^3$) gegeben. Die Methacrylatgruppen werden im Rahmen einer photoinduzierten radikalischen Polymerisation umgesetzt, wobei das Harz aushärtet. Mittels 3-Punktbiegeversuch wird nach 1,5 Tagen Lagerung unter Luft bzw. Wasser bei 40 °C das E-Modul sowie die Bruchfestigkeit der resultierenden Stäbchen bestimmt.

| | |
|---|---|
| E-Modul | ca. 1,74 GPa (Luft) / 1,13 GPa (Wasser) |
| Bruchfestigkeit | ca. 70 MPa (Luft) / 50 MPa (Wasser) |

Mittels Auftriebsmethode werden die folgenden Schrumpfungswerte im Rahmen einer photoinduzierten radikalischen Polymerisation erhalten:

5,4 Vol.-% / 6,0 Vol.-% nach Lagerung von 15 min / 1 Tg

Es resultieren deutlich geringere mechanische Kenndaten, ein deutlich stärkerer Abfall durch Wasserlagerung und überraschenderweise eine um ca. 1 Vol.-% höhere Schrumpfung als beim Produkt des Beispiels 11.

**Beispiel 12 (nicht erfindungsgemäß)**

Dies ist ein Beispiel, das eine Isocyanataddition an ein Silan der Formel (II) im Verhältnis 1:0,2 und damit die Voraussetzungen für die Herstellung eines Kieselsäurepoly(teil)-kondensäts aufzeigt, das noch freie Hydroxygruppen besitzt.

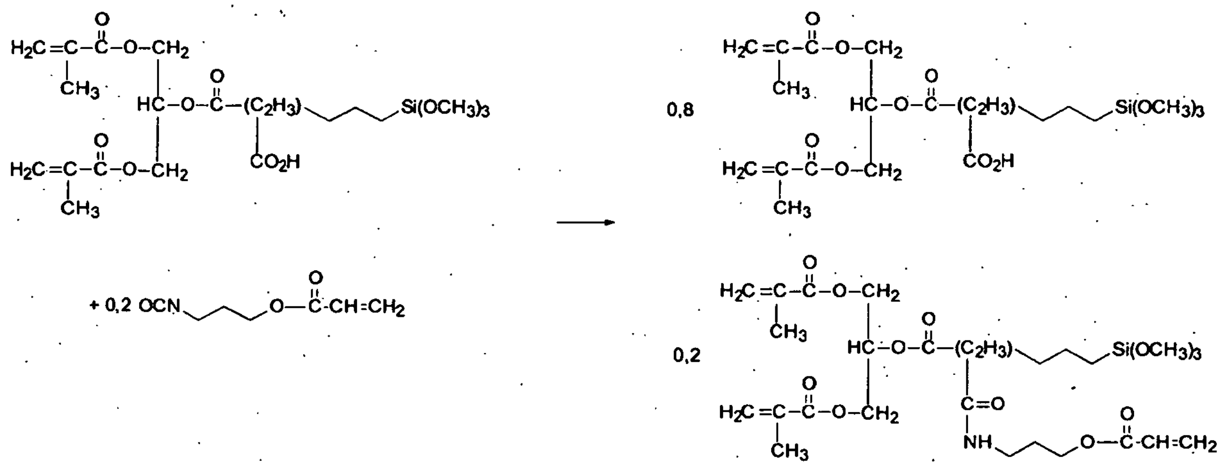

Zur Vorlage von 0,10 mol der Verbindung aus Beispiel 1 und Diazabicyclooctan als Katalysator werden unter trockener Atmosphäre (Sauerstoff) bei 40 °C unter Rühren 3,10 g (0,02 mol) Methacrylsäureisocyanatoethylester zugetropft und bei 40 °C gerührt. Die Umsetzung kann über die Abnahme der OCN-Bande mittels IR-Spektrum verfolgt werden. Die für die OCN-Gruppe charakteristische Bande erscheint im IR-Spektrum bei 2272 $cm^{-1}$. Die erfolgreich durchgeführte Synthese kann mit Hilfe von $^1H$-, $^{13}C$- und FT-IR-Spektroskopie nachgewiesen werden. Das resultierende, flüssige Produkt, bestehend aus Edukt mit 2 Doppelbindungen und Umsetzungsprodukt mit 3 Doppelbindungen kann durch übliche Aufarbeitung isoliert oder, bevorzugt, direkt nach üblichen Verfahren der weiteren Umsetzung, d. h. der Hydrolyse/Kondensation der $Si(OCH_3)_3$-Gruppen, unterworfen werden.

## Patentansprüche

1. Silan der nachstehenden Formel (Ia),

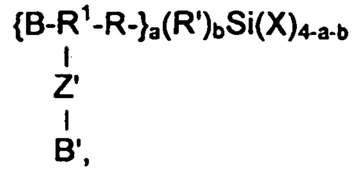

(Ia)

das frei ist von freien Hydroxy- und Carboxylgruppen und worin die Reste und Indices die folgende Bedeutung haben:

R ist eine offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome oder Aminogruppen an ihrem dem Siliciumatom abgewandten Ende tragen kann;
$R^1$ ist eine mit Z' substituierte, offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome oder Aminogruppen an einem ihrer Enden tragen kann,
R' ist eine offenkettige und/oder cyclische Alkyl-, Alkenyl-, Aryl-, Alkylaryl- oder Arylalkylgruppe mit vorzugsweise 1 bis 20 Kohlenstoffatomen,
B hat die Bedeutung einer geradkettigen oder verzweigten, organisch polymerisierbaren Gruppe mit mindestens einer C=C-Doppelbindung und mindestens 2 Kohlenstoffatomen, B' bedeutet $-R^2SiX_3$ oder $-R^2R'_bSiX_{3-b}$, worin $R^2$ eine Alkylengruppe mit 1 bis 10 Kohlenstoffatomen und R' wie oben definiert ist,
X ist eine Gruppe, die unter Ausbildung von Si-O-Si-Brücken eine hydrolytische Kondensationsreaktion eingehen kann,
Z' hat die Bedeutung -NH-C(O)O-, -NH-C(O)- oder -CO(O)-, wobei die beiden erstgenannte Reste über die NH-Gruppe am Rest B' gebunden sind, während die Carboxylatgruppe in beide Richtungen weisen kann,
a bedeutet 1 oder 2, und

b ist 0 oder 1.

2. Silan nach Anspruch 1, worin

R' eine Gruppe mit 1 bis 10, vorzugsweise 1 bis 4 Kohlenstoffatomen ist und/oder B mindestens ein Michaelsystem, besonders bevorzugt eine Acrylat- oder Methacrylatgruppe tragen und/oder
X eine $C_1$-$C_{10}$-Alkoxygruppe ist.

3. Silan nach Anspruch 1 oder 2, worin die Reste B Acrylsäureestergruppen und/oder Methacrylsäureestergruppen des Trimethylolpropan, der Glycerins, des Pentaerythrits, der $C_2$-$C_4$-Alkandiole, der Polyethylenglycole, der Polypropylenglycole oder des gegebenenfalls substituierten und/oder alkoxylierten Bisphenol A sind oder diese Ester umfassen.

4. Silan nach einem der voranstehenden Ansprüche, worin a gleich 1 und b gleich 0 ist, oder worin a gleich 1 und b gleich 1 ist.

5. Silan nach einem der voranstehenden Ansprüche, worin B eine (Meth-)Acrylatgruppe ist oder einen Rest umfasst, der über eine (Meth-)Acrylatgruppe an $R^1$ gebunden ist und keine weitere oder eine, zwei oder drei (Meth-)Acrylatestergruppen aufweist.

6. Silan nach einem der voranstehenden Ansprüche, worin B über eine Gruppe Z an $R^1$ gebunden ist, wobei Z eine -O-C(O)-, -S-C(O)- oder -NH-C(O)-Gruppe ist, wenn Z' -NH-CO- ist, und Z-O-$R^4$, -S-$R^4$, -NH-$R^4$, -C(O)O-$R^4$, -O-, -S-, -NH- oder -C(O)O- ist, wenn Z' -NH-C(O)O- ist, wobei $R^4$ die Bedeutung Alkylen, Arylen oder Alkylarylen mit 1 bis 10 (für ringfreie Gruppen) bzw. 6 bis 14 (für ringhaltige Gruppen) Kohlenstoffatomen hat.

7. Silan nach einem der voranstehenden Ansprüche und insbesondere nach Anspruch 5, worin Z' die Bedeutung -NH-C(O)O- oder -NH-C(O)- hat.

8. Silan nach einem der voranstehenden Ansprüche und insbesondere nach Anspruch 5 und/oder Anspruch 7, worin b null bedeutet, oder worin b 1 ist und R' eine $C_1$-$C_4$-Alkylgruppe ist.

9. Silan nach einem der voranstehenden Ansprüche, worin in Formel (Ia) die Reste X in den Gruppen $Si(X)_{4-a-b}$ eine andere Bedeutung als in B' aufweisen.

10. Silan nach einem der voranstehenden Ansprüche, worin B mindestens eine weitere Gruppe

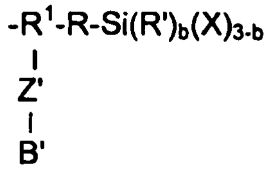

enthält, worin die Reste und Indices die in Anspruch 1 für Formel (1 a) angegebene Bedeutung besitzen.

11. Kieselsäurepoly(teil)kondensat der nachstehenden Formel (Ib),

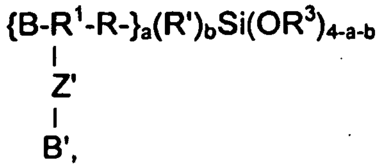

(Ib)

das frei ist von freien Hydroxy- und Carboxygruppen und
worin die Reste und Indices die folgende Bedeutung haben:

R ist eine offenkettige oder/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome oder Aminogruppen an ihrem dem Siliciumatom abgewandten Ende tragen kann;
$R^1$ ist eine mit Z' substituierte, offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome oder Aminogruppen an einem ihrer Enden tragen kann,
R' ist eine offenkettige und/oder cyclische Alkyl-, Alkenyl-, Aryl-, Alkylaryl- oder Arylalkylgruppe mit vorzugsweise 1 bis 20 Kohlenstoffatomen,
die Reste $R^3$ sind gleich oder verschieden und besitzen zumindest teilweise die Bedeutung einer Bindung zu einem anderen Siliciumatom und stellen im übrigen ein Wasserstoffatom, eine Alkylgruppe mit 1 bis 10 Kohlenstoffatomen oder eine Bindung zu einem anderen Metallatom dar, das sich in Kieselsäureheteropolykondensate einbauen lässt,
B hat die Bedeutung einer geradkettigen oder verzweigten organisch polymerisierbaren Gruppe mit mindestens einer C=C-Doppelbindung und mindestens 2 Kohlenstoffatomen, B' bedeutet $-R^2SiX_3$, $-R^2R'_bSiX_{3-b}$, $-R^2Si(OR^3)_3$ oder $-R^2R'_bSi(OR^3)_{3-b}$ worin $R^2$ eine Alkylengruppe mit 1 bis 10 Kohlenstoffatomen und $R^3$ und R' wie oben definiert ist,
Z' hat die Bedeutung -NH-C(O)O-, -NH-C(O)- oder-CO(O)-, wobei die beiden erstgenannte Reste über die NH-Gruppe am Rest B' gebunden sind, während die Carboxylatgruppe in beide Richtungen weisen kann,
a bedeutet 1 oder 2, und
b ist 0 oder 1.

12. Kieselsäurepoly(teil)kondensat nach Anspruch 11, worin R' eine Gruppe mit 1 bis 10, vorzugsweise 1 bis 4 Kohlenstoffatomen ist und/oder B mindestens ein Michaelsystem, besonders bevorzugt eine Acrylat- oder Methacrylatgruppe trägt und/oder X eine $C_1$-$C_{10}$-Alkoxygruppe ist.

13. Kieselsäurepoly(teil)kondensat nach einem der Ansprüche 11 oder 12, worin der oder die die Reste B teilweise oder vollständig (Meth-)Acrylatreste sind und/oder Acrylsäureestergruppen und/oder Methacrylsäureestergruppen des Trimethylolpropan, des Glycerols, des Pentaerythrits, der $C_2$-$C_4$-Alkandiole, der Polyethylenglycole, der Polypropylenglycole oder des gegebenenfalls substituierten und/oder alkoxylierten Bisphenol A sind oder diese Ester umfassen.

14. Kieselsäurepoly(teil)kondensat nach einem der Ansprüche 11 bis 13, worin a gleich 1 und b gleich 0 ist, oder worin a gleich 1 und b gleich 1 ist.

15. Kieselsäurepoly(teil)kondensat nach einem der Ansprüche 11 bis 14, worin B mindestens eine weitere Gruppe

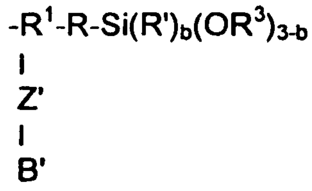

enthält, wobei die Reste und Indices die oben in Anspruch 11 angegebene Bedeutung haben.

16. Kieselsäurepoly(teil)kondensat nach einem der Ansprüche 11 bis 15, bestehend aus oder enthaltend ein Gemisch von Strukturelementen der Formel (Ib) mit unterschiedlichen Bedeutungen der Reste und Indices.

17. Kieselsäurepoly(teil)kondensat nach Anspruch 11, erhalten durch Hydrolyse und Kondensation eines oder mehrerer Silane mit einer der Formeln wie in den Ansprüchen 1 bis 10 definiert.

18. Kieselsäurepoly(teil)kondensat nach Anspruch 17, erhalten durch Hydrolyse und Kondensation einer Mischung aus einem oder mehreren Silanen mit einer der Formeln wie in den Ansprüchen 1 bis 9 definiert sowie einem oder mehreren weiteren Silanen und/oder einer oder mehreren hydrolysierbaren Metallverbindungen, ausgewählt unter hydrolysierbaren Metallverbindungen des Bor, Aluminium, Germanium, Zinn, Titan und Zirkonium.

**19.** Kieselsäurepoly(teil)kondensat, das neben der Struktur der Formel (Ib) wie in einem der Ansprüche 11 bis 17 angegeben, ein Strukturelement (III)

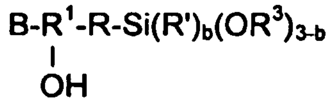

(III)

aufweist, worin die Reste und Indices die für Formel (Ib) in Anspruch 11 angegebene Bedeutung besitzen.

**20.** Kieselsäurepoly(teil)kondensat nach Anspruch 19, worin der Anteil der Strukturelemente mit der Formel (III), relativ zu den Anteilen der Strukturelemente mit der Formel (Ib), im Bereich von 5 bis 70 %, bevorzugt im Bereich von 10 bis 50 % liegt.

**21.** Kieselsäurepoly(teil)kondensat nach einem der Ansprüche 11 bis 20, das frei von polymerisierbaren organischen Monomeren ist.

**22.** Organisch polymerisierbare Masse (Komposit), umfassend ein Kieselsäurepoly(teil)kondensat nach einem der Ansprüche 11 bis 21 sowie mindestens einen Füllstoff.

**23.** Verwendung eines Kieselsäurepoly(teil)kondensats nach einem der Ansprüche 11 bis 21 oder einer organisch polymerisierbaren Masse nach Anspruch 22 als Beschichtungs-, Füll-, Klebe-, Verguss- oder Dichtungsmaterial, als Bindemittel für keramische Partikel, zur Herstellung oder in Form von Fasern, Partikeln, Folien, als Einbettmasse oder zur Herstellung von Formkörpern.

**24.** Organisch polymerisiertes Kieselsäurepoly(teil)kondensat der nachstehenden Formel (Ic),

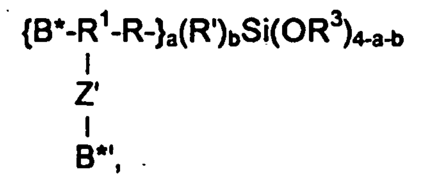

(Ic)

das frei ist von freien Hydroxy- und Carboxygruppen und
worin die Reste und Indices die folgende Bedeutung haben:

R ist eine offenkettige oder/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome oder Aminogruppen an ihrem dem Siliciumatom abgewandten Ende tragen kann:
$R^1$ ist eine mit Z' substituierte, offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome oder Aminogruppen an einem ihrer Enden tragen kann,
R' ist eine offenkettige und/oder cyclische Alkyl-, Alkenyl-, Aryl-, Alkylaryl- oder Arylalkylgruppe mit vorzugsweise 1 bis 20 Kohlenstoffatomen,
die Reste $R^3$ sind gleich oder verschieden und besitzen zumindest teilweise die Bedeutung einer Bindung zu einem anderen Siliciumatom und stellen im übrigen ein Wasserstoffatom, eine Alkylgruppe mit 1 bis 10 Kohlenstoffatomen oder eine Bindung zu einem anderen Metallatom dar, das sich in Kieselsäure-heteropolykondensate einbauen lässt,
B* hat die Bedeutung einer geradkettigen oder verzweigten organischen Gruppe mit mindestens einer C=C-Doppelbindung und mindestens 2 Kohlenstoffatomen, wobei diese Gruppen zumindest teilweise untereinander polymerisiert sind, B*' bedeutet $-R^2Si(OR^3)_3$ oder $-R^2R'_bSi(OR^3)_{3-b}$, worin $R^2$ eine Alkylengruppe mit 1 bis 10 Kohlenstoffatomen ist und und R' und $R^3$ wie oben definiert sind,
Z' hat die Bedeutung -NH-C(O)O-, -NH-C(O)- oder -CO(O)-, wobei die beiden erstgenannte Reste über die NH-Gruppe am Rest B' gebunden sind, während die Carboxylatgruppe in beide Richtungen weisen kann,

a bedeutet 1 oder 2,
und b ist 0 oder 1.

**25.** Organisch polymerisiertes Kieselsäurepoly(teil)kondensat nach Anspruch 24, erhalten durch organische Polymerisation eines Kieselsäurepoly(teil)kondensats gemäß einem der Ansprüche 10 bis 20.

**26.** Organisch polymerisiertes Kieselsäurepoly(teil)kondensat nach Anspruch 24 oder 25, zusätzlich enthaltend mindestens einen Füllstoff.

**27.** Copolymerisat, erhalten durch Copolymerisation eines Kieselsäurepoly(teil)kondensats nach einem der Ansprüche 11 bis 21 und einem oder mehreren organisch polymerisierbaren Monomeren und/oder Prepolymeren, ausgewählt unter radikalisch und/oder ionisch und/oder kovalent-nucleophil polymerisierbaren Monomeren und/oder Prepolymeren oder einem oder mehreren silangebundenen cyclischen System.

**28.** Verfahren zum Herstellen eines Silans mit der Formel (Ia) wie in einem der Ansprüche 1 bis 10 definiert, umfassend die folgenden Schritte:

(a) Bereitstellen einer Verbindung mit der Formel (II) oder eines Isomeren, eines Umesterungsproduktes oder eines durch Verlust eines Alkoholmoleküls entstandenen Kondensationsproduktes dieser Verbindung,

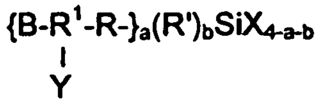

(II)

worin B, $R^1$, R, R', X a und b die in Anspruch 1 für die Formel (Ia) angegebenen Bedeutungen besitzen und Y OH oder COOH ist,
(b) Umsetzen dieser Verbindung oder des Isomeren, Umesterungsproduktes oder Kondensationsproduktes mit einer Verbindung

B'NCO,

worin B' die in Anspruch 1 für Formel (Ia) angegebene Bedeutung besitzt, und
(c) ggf. Aufarbeiten des Produktes.

**29.** Verfahren zum Herstellen eines Silans mit der Formel (Ia) wie in einem der Ansprüche 1 bis 10 definiert, umfassend die folgenden Schritte:

(a) Bereitstellen einer Verbindung mit der Formel (II) oder eines Isomeren, eines Umesterungsproduktes oder eines durch Verlust eines Alkoholmoleküls entstandenen Kondensationsproduktes dieser Verbindung,

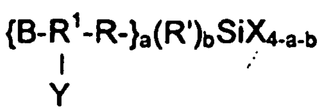

(II)

worin B, $R^1$, R, R', X a und b die in Anspruch 1 für die Formel (Ia) angegebenen Bedeutungen besitzen und Y COOH ist,
(b) Umsetzen dieser Verbindung oder des Isomeren, Umesterungsproduktes oder Kondensationsproduktes mit einer Verbindung

B'OH,

worin B' die in Anspruch 1 für Formel (Ia) angegebene Bedeutung besitzt, und
(c) ggf. Aufarbeiten des Produktes.

**30.** Verfahren zum Herstellen eines Silans mit der Formel (Ia)

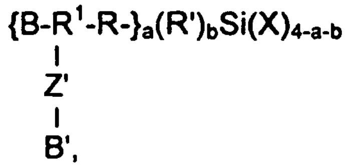

(Ia)

worin die Reste und Indices die folgende Bedeutung haben:

R ist eine offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome/Gruppen an ihrem dem Siliciumatom abgewandten Ende tragen kann;
$R^1$ ist eine mit Z' substituierte, offenkettige und/oder cyclische Alkylen-, Arylen- oder Alkylenarylengruppe mit jeweils 1 bis 10 Kohlenstoffatomen, die durch eine oder mehrere Sauerstoff- oder Schwefelatome oder Carboxyl- oder Aminogruppen unterbrochen sein oder solche Atome/Gruppen an einem ihrer Enden tragen kann,
R' ist eine offenkettige und/oder cyclische Alkyl-, Alkenyl-, Aryl-, Alkylaryl- oder Arylalkylgruppe mit vorzugsweise 1 bis 20 Kohlenstoffatomen,
B hat die Bedeutung einer geradkettigen oder verzweigten, organisch polymerisierbaren Gruppe mit mindestens einer C=C-Doppelbindung und mindestens 2 Kohlenstoffatomen, B' bedeutet $-R^2SiX_{4-a}$ oder $-R^2R'_bSiX_{4-a-b}$, worin $R^2$ eine Alkylengruppe mit 1 bis 10 Kohlenstoffatomen und R' wie oben definiert ist,
X ist eine Gruppe, die unter Ausbildung von Si-O-Si-Brücken eine hydrolytische Kondensationsreaktion eingehen kann,
Z' hat die Bedeutung -CO(O)-, wobei die Carboxylatgruppe in beide Richtungen weisen kann,
a bedeutet 1 oder 2,
und b ist 0 oder 1,

umfassend die folgenden Schritte:

(a) Bereitstellen einer Verbindung mit der Formel (11) oder eines Isomeren, eines Umesterungsproduktes oder eines durch Verlust eines Alkoholmoleküls entstandenen Kondensationsproduktes dieser Verbindung,

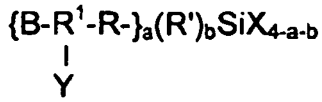

(II)

worin B, $R^1$, R, R', X, a und b die für die obige Formel (Ia) angegebenen Bedeutungen besitzen und Y OH ist,
(b) Umsetzen dieser Verbindung oder des Isomeren, Umesterungsproduktes oder Kondensationsproduktes mit einer Verbindung

B'C(O)X',

worin B' die in Anspruch 1 für Formel (Ia) angegebene Bedeutung besitzt und C(O)X' eine Carbonsäuregruppe oder eine aktivierte Carbonylverbindung, insbesondere ein Säurechlorid oder ein Säureanhydrid ist, und
(c) ggf. Aufarbeiten des Produktes.

## Claims

**1.** Silane of the structure (Ia) below

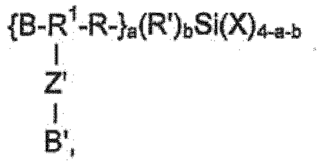

(Ia)

which is free of free hydroxyl and carboxyl groups, and
where the radicals and indices have the following meanings:

R is an open-chain and/or cyclic alkylene, arylene, or alkylene-arylene group, with 1 to 10 carbon atoms in each case, which can be interrupted by one or more oxygen or sulfur atoms or carboxyl or amino groups or can carry such atoms or amino groups at its end opposite the silicon atom,
$R^1$ is a Z'-substituted, open-chain and/or cyclic alkylene, arylene, or alkylene-arylene group, with 1 to 10 carbon atoms in each case, which can be interrupted by one or more oxygen or sulfur atoms or carboxyl or amino groups or can carry such atoms or amino groups at one of its ends,
R' is an open-chain and/or cyclic alkyl, alkenyl, aryl, or alkylaryl, or arylalkyl group, with preferably 1 to 20 carbon atoms,
B has the meaning of a straight-chain or branched organically polymerizable group with at least one C=C double bond and at least 2 carbon atoms, B' means $-R^2SiX_3$ or $^2R'_bSiX_{3-b}$, where $R^2$ is an alkylene group with 1 to 10 carbon atoms and R' is defined as above,
X is a group which can enter into a hydrolytic condensation reaction with the formation of Si-O-Si bridges,
Z' has the meaning -NH-C(O)O-, -NH-C(O)-, or -CO(O)-, where the two radicals named first are bonded via the NH group to the group B' while the carboxylate group can be arranged in both directions,
a means 1 or 2, and
b is 0 or 1.

2. Silane according to claim 1, in which

R' is a group with 1 to 10, preferably 1 to 4 carbon atoms and/or
B carries at least one Michael system, particularly preferably an acrylate or methacrylate group, and/or
X is a $C_1$-$C_{10}$ alkoxy group.

3. Silane according to claim 1 or 2, in which
the radicals B are acrylic acid ester groups and/or methacrylic acid ester groups of trimethylolpropane, of glycerin, of pentaerythritol, of $C_2$-$C_4$-alkane diols, of polyethylene glycols, of polypropylene glycols, or of optionally substituted and/or alkoxylated bisphenol A, or comprise these esters.

4. Silane according to one of the preceding claims in which a is equal to 1 and b is equal to 0.

5. Silane according to one of the preceding claims, in which B is a (meth)acrylate group or comprises a radical which is bonded via a (meth)acrylate group to $R^1$ and comprises no additional or one, two, or three (meth)acrylate groups.

6. Silane according to one of the preceding claims, in which B is bonded via a group Z to $R^1$, where Z is an -O-C(O)-, -S-C(O)-, or -NH-C(O)- group if Z' is -NH-CO-, and where Z is $-O-R^4$, $-S-R^4$, $-NH-R^4$, $-C(O)O-R^4$, -O-, -S-, -NH-, or -C(O)O- if Z' is -N H-C(O)O-, where $R^4$ has the meaning alkylene, arylene, or alkylarylene with 1 to 10 (for ringless groups) or 6 to 14 (for ring-containing groups) carbon atoms.

7. Silane according to one of the preceding claims and in particular according to claim 5, in which Z' has the meaning -NH-C(O)O- or -NH-C(O)-.

8. Silane according to one of the preceding claims and in particular according to claim 5 and/or claim 7, in which b means zero, or in which is 1 and R' is a $C_1$-$C_4$ alkyl group.

9. Silane according to one of the preceding claims, wherein in formula (Ia), the radicals X in the groups $Si(X)_{4-a-b}$ have another meaning than in B'.

10. Silane according to one of the preceding claims, in which B comprises at least one additional group

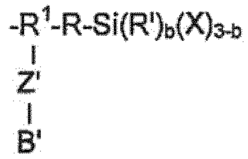

where the radicals and indices have the meanings specified in claim 1 for the formula (1a).

**11.** Silicic acid polycondensate or partial polycondensate with the following structure (Ib)

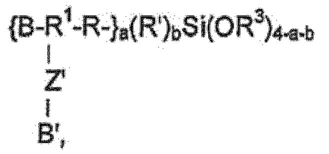

(Ib)

which is free of free hydroxyl and carboxyl groups and
where the radicals and indices have the following meanings:

R is an open-chain and/or cyclic alkylene, arylene, or alkylene-arylene group, with 1 to 10 carbon atoms in each case, which can be interrupted by one or more oxygen or sulfur atoms or carboxyl or amino groups or can carry such atoms or amino groups at its end opposite the silicon atom,
$R^1$ is a Z'-substituted, open-chain and/or cyclic alkylene, arylene, or alkylene-arylene group, with 1 to 10 carbon atoms in each case, which can be interrupted by one or more oxygen or sulfur atoms or carboxyl or amino groups or can carry such atoms or amino groups at one of its ends,
R' is an open-chain and/or cyclic alkyl, alkenyl, aryl, alkylaryl, or arylalkyl group, with preferably 1 to 20 carbon atoms,
the radicals $R^3$ are the same or different and have at least partly the meaning of a bond to another silicon atom and otherwise represent a hydrogen atom, an alkyl group with 1 to 10 carbon atoms, or a bond to another metal atom which can be incorporated into silicic acid heteropolycondensates,
B has the meaning of a straight-chain or branched organically polymerizable group with at least one C=C double bond and at least 2 carbon atoms, B' means $-R^2SiX_3$, $-R^2R_bSiX_{3-b}$, $-R^2Si(OR^3)_3$ or $-R^2R'_bSi(OR^3)_{3-b}$ where $R^2$ is an alkylene group with 1 to 10 carbon atoms and $R^3$ and R' are defined as above,
Z' has the meaning -NH-C(O)O-, -NH-C(O)-, or -CO(O)-, where the first two radicals named are bonded via the NH group to the group B' while the carboxylate group can be arranged in both directions,
a means 1 or 2, and
b is 0 or 1.

**12.** Silicic acid polycondensate or partial polycondensate according to claim 11, in which
R' is a group with 1 to 10, preferably 1 to 4 carbon atoms and/or

B carries at least one Michael system, particularly preferably an acrylate or methacrylate group, and/or
X is a $C_1$-$C_{10}$ alkoxy group.

**13.** Silicic acid polycondensate or partial polycondensate according to claim 11 or 12, in which the radical(s) B is/are partially or completely (meth)acrylic radicals and/or acrylic acid ester groups and/or methacrylic acid ester groups of trimethylolpropane, of glycerol, of pentaerythritol, of $C_2$-$C_4$-alkane diols, of polyethylene glycols, of polypropylene glycols, or of optionally substituted and/or alkoxylated bisphenol A, or comprise(s) these esters.

**14.** Silicic acid polycondensate or partial polycondensate according to one of claims 11 or 13 in which a is equal to 1 and b is equal to 0, or in which a is equal to 1 and b is equal to 1.

**15.** Silicic acid polycondensate or partial polycondensate according to one of claims 11 to 14, in which B comprises at least one additional group

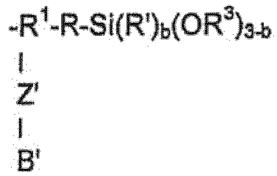

where the radicals and indices have the meanings specified in claim 11.

**16.** Silicic acid polycondensate or partial polycondensate according to one of claims 11 to 15, consisting of or comprising a mixture of structural elements of the structure (Ib) with different meanings for the radicals and indices.

**17.** Silicic acid polycondensate or partial polycondensate according to claim 11, obtained through hydrolysis and condensation of one or more silanes with one of the formulae as defined in claims 1 to 10.

**18.** Silicic acid polycondensate or partial polycondensate according to claim 17, obtained through hydrolysis and condensation of a mixture of one or more silanes with one of the formulae as defined in claims 1 to 9 as well as one or more additional silanes and/or one or more hydrolyzable metal compounds, selected under hydrolyzable metal compounds of boron, aluminum, germanium, tin, titanium, and zirconium.

**19.** Silicic acid polycondensate or partial polycondensate, comprising, besides the structure of formula (Ib) according to one of claims 11 to 17, a structural element (III)

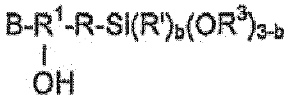

(III)

in which the radicals and indices have the meaning specified above for the structure (Ib) in claim 11.

**20.** Silicic acid polycondensate or partial polycondensate according to claim 19 in which the portion of structural elements of the formula (III), relative to the portions of structural elements of the formula (Ib), lies in the range of 5 to 70%, preferably in the range of 10 to 50%.

**21.** Silicic acid polycondensate or partial polycondensate according to one of claims 11 to 20, which is free from polymerizable organic monomers.

**22.** Organic polymerizable material (composite), comprising a silicic acid polycondensate or partial polycondensate according to one of claims 11 to 21 as well as a filling material.

**23.** Use of a silicic acid polycondensate or partial polycondensate according to one of claims 11 to 21 or an organically polymerizable material according to claim 22 as coating, filling, adhesive, casting, and sealing material, as binding agent for ceramic particles, for the production of, or in the form of, fibers, particles, films, as embedding materials or for the production of shaped bodies.

**24.** Organically polymerized silicic acid polycondensate or partial polycondensate of the following structure (Ic)

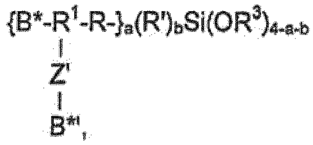

(Ic)

which is free from free hydroxyl and carboxyl groups, and
where the radicals and indices have the following meanings:

R is an open-chain and/or cyclic alkylene, arylene, or alkylene-arylene group, with 1 to 10 carbon atoms in each case, which can be interrupted by one or more oxygen or sulfur atoms or carboxyl or amino groups or can carry such atoms or amino groups at its end opposite the silicon atom,
$R^1$ is a Z'-substituted, open-chain and/or cyclic alkylene, arylene, or alkylene-arylene group, with 1 to 10 carbon atoms in each case, which can be interrupted by one or more oxygen or sulfur atoms or carboxyl or amino groups or can carry such atoms or amino groups at one of its ends,
R' is an open-chain and/or cyclic alkyl, alkenyl, aryl, alkylaryl, or arylalkyl group, with preferably 1 to 20 carbon atoms,
the radicals $R^3$ are the same or different and have at least partly the meaning of a bond to another silicon atom and otherwise represent a hydrogen atom, an alkyl group with 1 to 10 carbon atoms, or a bond to another metal

atom which can be incorporated into silicic acid heteropolycondensates,
B* has the meaning of a straight-chain or branched organic group with at least one C=C double bond and at least 2 carbon atoms, B*' means $-R^2Si(OR^3)_3$ or $-R^2R'_bSi(OR^3)_{3-b}$, where $R^2$ s an alkylene group with 1 to 10 carbon atoms and R' and $R^3$ are defined as above,
Z' has the meaning -NH-C(O)O-, -NH-C(O)-, or -CO(O)-, where the two radicals named first are bonded via the NH group to the group B' while the carboxylate group can be arranged in both directions,
a means 1 or 2, and
b is 0 or 1.

**25.** Organically polymerized silicic acid polycondensate or partial polycondensate according to claim 24, obtained by organic polymerization of a silicic acid polycondensate or partial polycondensate according to one of claims 10 to 20.

**26.** Organically polymerized silicic acid polycondensate or partial polycondensate according to claim 24 or 25, additionally containing at least one filling material.

**27.** Copolymerizate, obtained through copolymerization of a silicic acid polycondensate or partial polycondensate according to one of claims 11 to 21 and one or more organically polymerizable monomers and/or prepolymers, selected under radically and/or ionically and/or covalent-nucleophilically polymerizable monomers and/or prepolymers or one or more silane-bonded cyclic systems.

**28.** Process for the production of a silane with the formula (Ia) as defined in one of claims 1 to 10, comprising the following steps

(a) providing a compound with the formula (II) or an isomer,
a re-esterification product, or one of this compound's condensation products arising by loss of an alcohol molecule

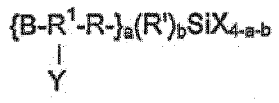

(II)

in which B, $R^1$, R, R', X, a, and b have the meanings specified in claim 1 for the formula (Ia) and Y is OH or COOH,
(b) reacting this compound or the isomer, re-esterification product,
or condensation product with a compound

B'NCO,

in which B' has the meaning specified in claim 1 for formula (Ia),
and
(c) optionally, working-up the product.

**29.** Process for the production of a silane with the formula (Ia) as defined in one of claims 1 to 10, including the following steps:

(a) providing a compound with the formula (II) or an isomer
a re-esterification product, or one of this compound's condensation products arising by loss of an alcohol molecule

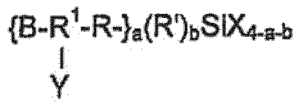

(II)

in which B, $R^1$, R, R', X, a, and b have the meanings specified in claim 1 for the formula (Ia),
and Y means COOH.
(b) reacting this compound or the isomer, re-esterification product,
or condensation product with a compound

B'OH,

in which B' has the meaning specified in claim 1 for formula (Ia),
and
(c) optionally, working-up the product.

**30.** Process for the production of a silane with the formula (Ia)

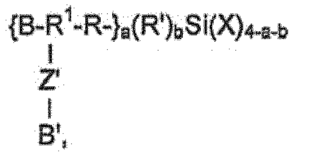

(Ia)

where the radicals and indices have the following meanings:

R is an open-chain and/or cyclic alkylene, arylene, or alkylene-arylene group, with 1 to 10 carbon atoms in each case, which can be interrupted by one or more oxygen or sulfur atoms or carboxyl or amino groups or can carry such atoms or groups at its end opposite the silicon atom,
$R^1$ is a Z'-substituted, open-chain and/or cyclic alkylene, arylene, or alkylene-arylene group with 1 to 10 carbon atoms in each case, which can be interrupted by one or more oxygen or sulfur atoms or carboxyl or amino groups or can carry such atoms or amino groups one of its ends,
R' is an open-chain and/or cyclic alkyl, alkenyl, aryl, alkylaryl, or arylalkyl group with preferably 1 to 20 carbon atoms,
B has the meaning of a straight-chain or branched organically polymerizable group with at least one C=C double bond and at least 2 carbon atoms, B' means $-R^2SiX_3$ or
$-R^2R'_bSiX_{4-b}$, where $R^2$ is an alkylene group with 1 to 10 carbon atoms and R' is defined as above,
X is a group which can enter into a hydrolytic condensation reaction with the formation of Si-O-Si bridges.
Z' has the meaning -CO(O)- wherein the carboxylate group can be arranged in both directions,
a means 1 or 2,
and b is 0 or 1,

comprising the following steps:

(a) providing a compound with the formula (II) or an isomer
a re-esterification product, or one of this compound's condensation products arising by loss of an alcohol molecule

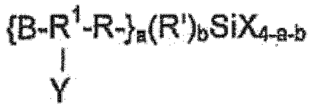

(II)

in which B, $R^1$, R, R', X, a, and b have the meanings specified in claim 1 for the formula (Ia) and Y is OH,
(b) reacting this compound or the isomer, re-esterification product,
or condensation product with a compound

B'C(O)X',

in which B' has the meaning specified in claim 1 for formula (Ia) and C(O)X' is a carboxylic acid group or an activated carbonyl compound, in particular an acid chloride or an acid anhydride,
and
(c) optionally, working-up the product.

## Revendications

**1.** Silane de formule (Ia) suivante,

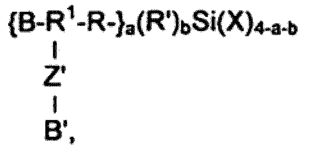

(Ia)

qui est dépourvu de groupes hydroxyle et carboxyle libres et dans lequel les radicaux et indices ont la signification suivante :

R est un groupe alkylène, arylène ou alkylènearylène linéaire et/ou cyclique ayant respectivement 1 à 10 atomes de carbone qui peut être interrompu par un ou plusieurs atomes d'oxygène ou de soufre ou groupes carboxyle ou amino ou qui peut porter ces atomes ou groupes amino sur son extrémité opposée à l'atome de silicium ;
$R^1$ est un groupe alkylène, arylène ou alkylènearylène linéaire et/ou cyclique Z'-substitué ayant respectivement 1 à 10 atomes de carbone qui peut être interrompu par un ou plusieurs atomes d'oxygène ou de soufre ou groupes carboxyle ou amino ou qui peut porter ces atomes ou groupes amino sur l'une de ses extrémités,
R' est un groupe alkyle, alcényle, aryle, alkylaryle ou arylalkyle linéaire et/ou cyclique ayant de préférence 1 à 20 atomes de carbone,
B désigne un groupe linéaire ou ramifié organiquement polymérisable ayant au moins une liaison double C=C et au moins 2 atomes de carbone, B' désigne $-R^2SiX_3$ ou $-R^2R'_bSiX_{3-b}$, $R^2$ désignant un groupe alkylène ayant 1 à 10 atomes de carbone et R' étant tel que défini ci-dessus,
X est un groupe pouvant entraîner une réaction de condensation hydrolytique avec formation de ponts Si-O-Si,
Z' désigne -NH-C(O)O-, -NH-C(O)- ou -CO(O)-, les deux radicaux mentionnés en premier étant liés par le groupe NH au radical B' tandis que le groupe carboxylate peut pointer dans les deux sens,
a désigne 1 ou 2, et
b égale 0 ou 1.

**2.** Silane selon la revendication 1, dans lequel

R' est un groupe ayant 1 à 10, de préférence 1 à 4 atomes de carbone et/ou
B porte au moins un système de Michael, de manière particulièrement préférée un groupe acrylate ou un groupe méthacrylate et/ou
X est un groupe alcoxy en $C_1$-$C_{10}$.

**3.** Silane selon la revendication 1 ou 2, dans lequel les radicaux B sont des groupes esters de l'acide acrylique et/ou des groupes esters de l'acide méthacrylique du triméthylolpropane, du glycérol, du pentaérythritol, des alcanediols en $C_2$-$C_4$, des polyéthylène glycols, des polypropylène glycols ou du bisphénol A substitué et/ou alcoxylé le cas échéant, ou bien comprennent ces esters.

**4.** Silane selon l'une quelconque des revendications précédentes, dans lequel a égale 1 et b égale 0 ou dans lequel a égale 1 et b égale 1.

**5.** Silane selon l'une quelconque des revendications précédentes, dans lequel B est un groupe (méth)acrylate ou comprend un radical qui est lié à $R^1$ par un groupe (méth)acrylate et qui ne présente pas d'autre groupe ester de (méth)acrylate ou bien un, deux ou trois.

**6.** Silane selon l'une quelconque des revendications précédentes, dans lequel B est lié à $R^1$ par un groupe Z, Z étant un groupe -O-C(O)-, -S-C(O)- ou -NH-C(O)-, si Z' est -NH-CO-, et Z est $-O-R^4$, $-S-R^4$, $-NH-R^4$, $-C(O)O-R^4$, -O-, -S-, -NH- ou -C(O)O-, si Z' est -NH-C(O)O-, $R^4$ désignant un groupe alkylène, arylène ou alkylarylène ayant 1 à 10 atomes de carbone (pour les groupes acycliques) ou 6 à 14 atomes de carbone (pour les groupes contenant des cycles).

**7.** Silane selon l'une quelconque des revendications précédentes et en particulier selon la revendication 5, dans lequel Z' désigne -NH-C(O)O- ou -NH-C(O)-.

**8.** Silane selon l'une quelconque des revendications précédentes et en particulier selon la revendication 5 et/ou la revendication 7, dans lequel b égale 0 ou dans lequel b égale 1 et R' est un groupe alkyle en $C_1$-$C_4$.

**9.** Silane selon l'une quelconque des revendications précédentes, dans lequel, dans la formule (Ia), les radicaux X dans les groupes $Si(X)_{4-a-b}$ ont une autre signification qu'en B'.

**10.** Silane selon l'une quelconque des revendications précédentes, dans lequel B contient au moins un autre groupe

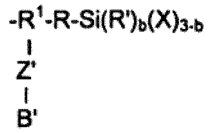

dans lequel les radicaux et indices ont la signification donnée dans la revendication 1 pour la formule (Ia).

**11.** Polycondensé (partiel) d'acide silicique de formule (Ib) suivante,

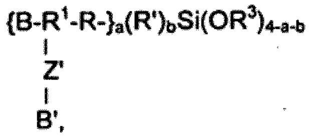

(Ib)

qui est dépourvu de groupes hydroxyle et carboxyle libres et dans lequel les radicaux et indices ont la signification suivante :

R est un groupe alkylène, arylène ou alkylènearylène linéaire et/ou cyclique ayant respectivement 1 à 10 atomes de carbone qui peut être interrompu par un ou plusieurs atomes d'oxygène ou de soufre ou groupes carboxyle ou amino ou qui peut porter ces atomes ou groupes amino sur son extrémité opposée à l'atome de silicium ;
$R^1$ est un groupe alkylène, arylène ou alkylènearylène linéaire et/ou cyclique Z'-substitué ayant respectivement 1 à 10 atomes de carbone qui peut être interrompu par un ou plusieurs atomes d'oxygène ou de soufre ou groupes carboxyle ou amino ou qui peut porter ces atomes ou groupes amino sur l'une de ses extrémités,
R' est un groupe alkyle, alcényle, aryle, alkylaryle ou arylalkyle linéaire et/ou cyclique ayant de préférence 1 à 20 atomes de carbone,
les radicaux $R^3$ sont identiques ou différents et désignent au moins en partie une liaison à un autre atome de silicium et représentent en outre un atome d'hydrogène, un groupe alkyle ayant 1 à 10 atomes de carbone ou une liaison à un autre atome métallique qui peut être inséré dans l'hétéropolycondensé d'acide silicique,
B désigne un groupe linéaire ou ramifié organiquement polymérisable ayant au moins une liaison double C=C et au moins 2 atomes de carbone, B' désigne $-R^2SiX_3$, $-R^2R'_bSiX_{3-b}$, $-R^2Si(OR^3)_3$ ou $-R^2R'_bSi(OR^3)_{3-b}$ dans lesquels $R^2$ désigne un groupe alkylène ayant 1 à 10 atomes de carbone et $R^3$ et R' sont tels que définis ci-dessus,
Z' désigne -NH-C(O)O-, -NH-C(O)- ou -CO(O)-, les deux radicaux mentionnés en premier étant liés par le groupe NH au radical B' tandis que le groupe carboxylate peut pointer dans les deux sens,
a désigne 1 ou 2, et
b égale 0 ou 1.

**12.** Polycondensé (partiel) d'acide silicique selon la revendication 11, dans lequel R' est un groupe ayant 1 à 10, de préférence 1 à 4 atomes de carbone et/ou B porte au moins un système de Michael, de manière particulièrement préférée un groupe acrylate ou un groupe méthacrylate et/ou X est un groupe alcoxy en $C_1$-$C_{10}$.

**13.** Polycondensé (partiel) d'acide silicique selon l'une quelconque des revendications 11 ou 12, dans lequel le ou les radicaux B sont partiellement ou totalement des radicaux (méth)acrylate et/ou des groupes esters de l'acide acrylique et/ou des groupes esters de l'acide méthacrylique du triméthylolpropane, du glycérol, du pentaérythritol, des alcanediols en $C_2$-$C_4$, des polyéthylène glycols, des polypropylène glycols ou du bisphénol A substitué et/ou alcoxylé le cas échéant ou bien comprennent ces esters.

**14.** Polycondensé (partiel) d'acide silicique selon l'une quelconque des revendications 11 à 13, dans lequel a égale 1 et b égale 0, ou dans lequel a égale 1 et b égale 1.

**15.** Polycondensé (partiel) d'acide silicique selon l'une quelconque des revendications 11 à 14, dans lequel B contient au moins un autre groupe

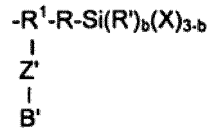

les radicaux et indices ayant la signification donnée dans la revendication 11 ci-dessus.

**16.** Polycondensé (partiel) d'acide silicique selon l'une quelconque des revendications 11 à 15, composé de ou contenant un mélange d'éléments structuraux de formule (Ib) dont les radicaux et des indices ont des significations différentes.

**17.** Polycondensé (partiel) d'acide silicique selon la revendication 11, obtenu en hydrolysant et en condensant un ou plusieurs silanes ayant l'une des formules telles que définies dans les revendications 1 à 10.

**18.** Polycondensé (partiel) d'acide silicique selon la revendication 17, obtenu en hydrolysant et en condensant un mélange composé d'un ou de plusieurs silanes ayant une des formules telles que définies dans les revendications 1 à 9 ainsi que d'un ou de plusieurs autres silanes et/ou d'un ou plusieurs composés métalliques hydrolysables choisis parmi les composés métalliques hydrolysables du bore, de l'aluminium, du germanium, de l'étain, du titane et du zirconium.

**19.** Polycondensé (partiel) d'acide silicique qui présente, outre la structure de formule (Ib) selon l'une quelconque des revendications 11 à 17, un élément structural (III),

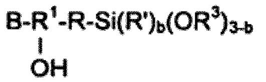

(III)

dans lequel les radicaux et indices ont la signification donnée pour la formule (Ib) dans la revendication 11.

**20.** Polycondensé (partiel) d'acide silicique selon la revendication 19, dans lequel la proportion d'éléments structuraux de formule (III) se situe dans la plage allant de 5 à 70 %, de préférence dans la plage de 10 à 50 % par rapport aux proportions des éléments structuraux de formule (Ib).

**21.** Polycondensé (partiel) d'acide silicique selon l'une quelconque des revendications 11 à 20, qui est dépourvu de monomères organiques polymérisables.

**22.** Masse (composite) organiquement polymérisable, comprenant un polycondensé (partiel) d'acide silicique selon l'une quelconque des revendications 11 à 21 ainsi qu'au moins une charge.

**23.** Utilisation d'un polycondensé (partiel) d'acide silicique selon l'une quelconque des revendications 11 à 21 ou d'une masse organiquement polymérisable selon la revendication 22 en tant que matériau de revêtement, matériau de charge, matériau adhésif, matériau de scellement ou matériau d'étanchéité, en tant que liant pour particules céramiques, pour la fabrication, ou sous la forme, de fibres, de particules, de feuilles, en tant que masse d'inclusion ou pour la fabrication de corps moulés.

**24.** Polycondensé (partiel) d'acide silicique organiquement polymérisé de formule (Ic) suivante :

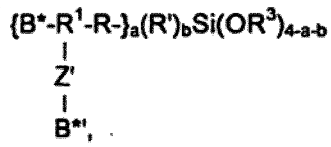

(Ic)

qui est dépourvu de groupes hydroxyle et carboxyle libres et dans lequel les radicaux et indices ont la signification suivante :

R est un groupe alkylène, arylène ou alkylènearylène linéaire et/ou cyclique ayant respectivement 1 à 10 atomes

de carbone qui peut être interrompu par un ou plusieurs atomes d'oxygène ou de soufre ou groupes carboxyle ou amino ou qui peut porter ces atomes ou groupes amino sur son extrémité opposée à l'atome de silicium ;
$R^1$ est un groupe alkylène, arylène ou alkylènearylène linéaire et/ou cyclique Z'-substitué ayant respectivement 1 à 10 atomes de carbone qui peut être interrompu par un ou plusieurs atomes d'oxygène ou de soufre ou groupes carboxyle ou amino ou qui peut porter ces atomes/groupes amino sur l'une de ses extrémités,
R' est un groupe alkyle, alcényle, aryle, alkylaryle ou arylalkyle linéaire et/ou cyclique ayant de préférence 1 à 20 atomes de carbone,
les radicaux $R^3$ sont identiques ou différents et désignent au moins en partie une liaison à un autre atome de silicium et représentent du reste un atome d'hydrogène, un groupe alkyle ayant 1 à 10 atomes de carbone ou une liaison à un autre atome métallique qui peut être inséré dans l'hétéropolycondensé d'acide silicique,
B* désigne un groupe organique linéaire ou ramifié ayant au moins une liaison double C=C et au moins 2 atomes de carbone, ces groupes étant au moins partiellement polymérisés mutuellement, B*' désigne $-R^2Si(OR^3)_3$ ou $-R^2R'_bSi(OR^3)_{3-b}$, $R^2$ étant un groupe alkylène ayant 1 à 10 atomes de carbone et R' et $R^3$ étant tels que définis ci-dessus,
Z' désigne -NH-C(O)O-, -NH-C(O)- ou -CO(O)-, les deux radicaux mentionnés en premier étant liés par le groupe NH au radical B' tandis que le groupe carboxylate peut pointer dans les deux sens,
a désigne 1 ou 2, et
b égale 0 ou 1.

**25.** Polycondensé (partiel) d'acide silicique organiquement polymérisé selon la revendication 24, obtenu par polymérisation organique d'un polycondensé (partiel) d'acide silicique selon l'une quelconque des revendications 10 à 20.

**26.** Polycondensé (partiel) d'acide silicique organiquement polymérisé selon la revendication 24 ou 25, contenant de plus au moins une charge.

**27.** Copolymérisat obtenu par copolymérisation d'un polycondensé (partiel) d'acide silicique selon l'une quelconque des revendications 11 à 21 et un ou plusieurs monomères et/ou prépolymères organiquement polymérisables, choisis parmi des monomères et/ou des prépolymères polymérisables par voie radicalaire et/ou ionique et/ou nucléophiliquement covalente ou bien un ou plusieurs systèmes cycliques liés par un silane.

**28.** Procédé pour produire un silane de formule (Ia) comme défini selon l'une quelconque des revendications 1 à 10, comprenant les étapes suivantes consistant à :

(a) préparer un composé de formule (II) ou un isomère, un produit de transestérification ou un produit de condensation de ce composé obtenu par la perte d'une molécule d'alcool,

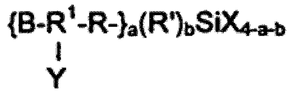

(II)

dans lequel B, $R^1$, R, R', X, a et b ont les significations données dans la revendication 1 pour la formule (Ia) et Y est OH et COOH,
(b) transformer ce composé ou l'isomère, le produit de transestérification ou le produit de condensation avec un composé

B'NCO,

dans lequel B' a la signification donnée dans la revendication 1 pour la formule (Ia), et
(c) le cas échéant, le traitement du produit.

**29.** Procédé pour produire un silane de formule (Ia) comme défini dans l'une quelconque des revendications 1 à 10, comprenant les étapes suivantes consistant à :

(a) préparer un composé de formule (II) ou un isomère, un produit de transestérification ou un produit de condensation de ce composé obtenu par la perte d'une molécule d'alcool,

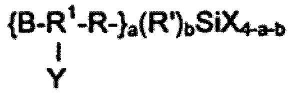

(II)

dans lequel B, $R^1$, R, R', X, a et b ont les significations données dans la revendication 1 pour la formule (Ia) et Y est COOH,
(b) transformer ce composé ou l'isomère, le produit de transestérification ou le produit de condensation avec un composé

B'OH,

dans lequel B' a la signification donnée dans la revendication 1 pour la formule (Ia), et
(c) le cas échéant, le traitement du produit.

**30.** Procédé pour préparer un silane de formule (Ia)

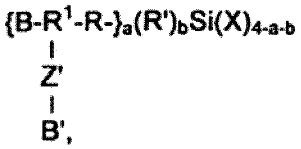

(Ia)

les radicaux et indices ayant la signification suivante :

R est un groupe alkylène, arylène ou alkylènearylène linéaire et/ou cyclique ayant respectivement 1 à 10 atomes de carbone qui peut être interrompu par un ou plusieurs atomes d'oxygène ou de soufre ou groupes carboxyle ou amino ou qui peut porter ces atomes/groupes amino sur son extrémité opposée à l'atome de silicium ;
$R^1$ est un groupe alkylène, arylène ou alkylènearylène linéaire et/ou cyclique Z'-substitué ayant respectivement 1 à 10 atomes de carbone qui peut être interrompu par un ou plusieurs atomes d'oxygène ou de soufre ou groupes carboxyle ou amino ou qui peut porter ces atomes ou groupes amino sur l'une de ses extrémités,
R' est un groupe alkyle, alcényle, aryle, alkylaryle ou arylalkyle linéaire et/ou cyclique ayant de préférence 1 à 20 atomes de carbone,
B désigne un groupe linéaire ou ramifié organiquement polymérisable ayant au moins une liaison double C=C et au moins 2 atomes de carbone, B' désigne $-R^2SiX_{4-a}$ ou $-R^2R'_bSiX_{4-a-b}$, dans lesquels $R^2$ désigne un groupe alkylène ayant 1 à 10 atomes de carbone et R' est tel que défini ci-dessus,
X est un groupe pouvant entraîner une réaction de condensation hydrolytique avec formation de ponts Si-O-Si,
Z' désigne -CO(O)-, le groupe carboxylate pouvant pointer dans les deux sens,
a désigne 1 ou 2, et
b égale 0 ou 1,

comprenant les étapes suivantes consistant à :

(a) préparer un composé de formule (II) ou un isomère, un produit de transestérification ou un produit de condensation de ce composé obtenu par la perte d'une molécule d'alcool,

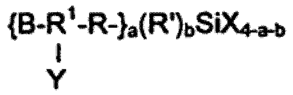

(II)

dans lequel B, $R^1$, R, R', X, a et b ont les significations données pour la formule (Ia) ci-dessus et Y est OH,
(b) transformer ce composé ou l'isomère, le produit de transestérification ou le produit de condensation avec un composé

B'C(O)X',

dans lequel B' a la signification donnée dans la revendication 1 pour la formule (Ia), et C(O)X' est un groupe acide carboxylique ou un autre composé carbonyle activé, notamment un chlorure d'acide ou un anhydride d'acide, et
(c) le cas échéant, le traitement du produit.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE PS2758414 C
- DE 4011044 C2
- DE 4405261 A1
- DE 4416857 C1
- DE 4125201 C1


### In der Beschreibung aufgeführte Nicht-Patentliteratur


- *JTB (ISC,* 1992, 61-72
- **BAYREUTH.** *Polymer + Materials Research Symposium,* 1993, 14-17
- *Journal f. prakt. Chemie,* 1988, vol. 330 (2), 316-318